# EUROPÄISCHE PATENTANMELDUNG

(11) **EP 4 484 140 A1**
(43) Veröffentlichungstag der Anmeldung: **01.01.2025**
(21) Anmeldenummer: 23181387.4
(22) Anmeldetag: 26.06.2023
(51) Int. Cl.: B29C 70/48

(54) **HERSTELLUNGSVERFAHREN EINES FASERVERSTÄRKTEN FILTERTROMMELELEMENTS FÜR EINE FILTERVORRICHTUNG, VORRICHTUNG ZUR HERSTELLUNG EINES FASERVERSTÄRKTES FILTERTROMMELELEMENTS FÜR EINE FILTERVORRICHTUNG UND DAMIT HERGESTELLTES FILTERTROMMELELEMENT**

(71) Anmelder: ANDRITZ Separation GmbH, 85256 Vierkirchen (DE)
(72) Erfinder: SCHERER, Dieter, 85276 Pfaffenhofen (DE); KNOBLOCH, Wolfgang, 82327 Tutzing, Unterzeismering (DE); REIFENBERG, Sonja, 85221 Dachau (DE)
(74) Vertreter: Viering, Jentschura & Partner mbB Patent- und Rechtsanwälte

(57) **Zusammenfassung**

Ein Herstellungsverfahren eines faserverstärkten Filtertrommelelements (100) für eine Filtervorrichtung, eine Vorrichtung zur Herstellung eines faserverstärkten Filtertrommelelements und ein damit hergestelltes faserverstärktes Filtertrommelelement sind bereitgestellt, wobei bei dem Herstellungsverfahren eine Formeinrichtung (10) mit einem Außenkonturelement (20) und einem Innenkonturelement (30) bereitgestellt wird, wobei das Außenkonturelement (20)u nd das Innenkonturelement (30) derart zueinander komplementär ausgebildet sind und angeordnet werden, dass das Außenkonturelement (20) und das Innenkonturelement (30) einen Formhohlraum (18) in Gestalt des herzustellenden faserverstärkten Filtertrommelelements zwischen dem Außenkonturelement (20) und dem Innenkonturelement (30) definieren, Verstärkungsfasern (100) innerhalb des Formhohlraums (18) angeordnet werden, Matrixmaterial in den Formhohlraum eingebracht wird und das Matrixmaterial ausgehärtet wird.

## Beschreibung

### Technisches Gebiet

Die Erfindung betrifft ein Herstellungsverfahren eines faserverstärkten Filtertrommelelements für eine Filtervorrichtung, eine Vorrichtung zur Herstellung eines faserverstärktes Filtertrommelelements für eine Filtervorrichtung und ein damit hergestelltes Filtertrommelelement, wodurch Personalaufwand und Herstellungskosten für das faserverstärkte Filtertrommelelements gesenkt, die Herstellungszeit verkürzt, die Fertigungsqualität verbessert sowie Material eingespart werden können.

### Hintergrund

Filtervorrichtungen, wie zum Beispiel Trommelfiltervorrichtungen, Filterzentrifugenvorrichtungen oder Sedimentationszentrifugenvorrichtung, werden z.B. bei chemischen, pharmazeutischen und biologischen Anwendungen im industriellen Maßstab zur Filtration von Suspensionen (Fest-Flüssig-Gemischen) eingesetzt. Die Filtervorrichtungen verfügen in der Regel über eine Trommel, welche je nach Art der Filtervorrichtung verschiedene Funktionen, beispielsweise als eine Filtertrommel, ausübt.

Die Trommel solcher Filtervorrichtungen stellt ein äußerst funktionswichtigstes und zugleich sehr kostenintensives Bauteil dar. Bedingt durch die Umgebungsbedingungen, welche die Trommel der Filtervorrichtungen ausgesetzt wird, wie zum Beispiel bei hoch korrosiven Anwendungen, müssen sehr (z.B. korrosionsbeständige und daher teure Materialien eingesetzt werden.

In der Technik ist es daher bereits bekannt, beispielsweise aus der EP 3 263 205 A1, eine Trommel solcher Filtervorrichtungen in Verbundbauweise vorzusehen, bei welcher ein gegen die Umgebungsbedingungen beständiges thermoplastischen Funktionsmaterial mit einer faserverstärkten Grundstruktur durch Laminieren fest verbunden wird.

Ein hierfür regelmäßig verwendeter manueller Laminierprozess, bei welchem ein schichtweiser Aufbau aus Matrixmaterial und den lastragenden Fasern überwiegend durch manuelle Arbeit erfolgt, ist jedoch materialaufwändig, dauert lange und erfordert hohen Personalaufwand, was sich negativ auf die Kosten, den Materialverbrauch und die Produktivität/Herstellungszeit auswirkt. Der manuelle Laminierprozess ist zudem nur schwer weiter optimierbar und erfordert größere Bauteildicken, um die nötigen Festigkeits- und Steifigkeitsanforderungen an die gefertigten Trommelelemente zu erreichen.

Es besteht daher ein Bedarf nach einer verbesserten Herstellungstechnik, welche Personalaufwand und Herstellungskosten für das faserverstärkte Filtertrommelelements senkt, die Herstellungszeit verkürzt, die Fertigungsqualität verbessert sowie Material einspart.

### Kurze Erläuterung

Hierzu stellt die vorliegende Erfindung ein Herstellungsverfahren eines faserverstärkten Filtertrommelelements für eine Filtervorrichtung nach Anspruch 1, eine Vorrichtung zur Herstellung eines faserverstärktes Filtertrommelelements für eine Filtervorrichtung nach Anspruch 12 und ein damit hergestelltes Filtertrommelelement nach Anspruch 15 bereit. Vorteilhafte Weiterbildungen sind in den abhängigen Ansprüchen erläutert.

Durch die Erfindung können der Personalaufwand und Herstellungskosten für die Herstellung von faserverstärkten Filtertrommelelementen gesenkt werde, kann die Herstellungszeit verkürzt werden und können die Fertigungsqualität verbessert sowie Material eingespart werden.

So kann der bisherige manuelle Laminierprozess durch einen industriellen Formvorgang ersetzt werden, wodurch Personal eingespart und Herstellungskosten gesenkt werden können. Ferner können durch den Herstellungsprozess der vorliegenden Erfindung die aufgrund der beim manuellen Laminierprozess eingesetzten Handarbeit auftretenden Unsicherheiten hinsichtlich Faserausrichtung unterbunden werden und können die Fasern präziser angeordnet werden, was die Fertigungsqualität verbessert. Das Verarbeiten des Matrixmaterials kann in der vorliegenden Erfindung zudem in einem Arbeitsgang erfolgen, wodurch auch ein Problem beim konventionellen Laminierprozess, dass eine Schicht der Matrix austrocknet und damit die Verbindung mit einer nachfolgen aufgetragenen Matrix gefährdet ist, verhindert wird. Die Bauteildicke kann zudem reduziert werden und damit Material und Kosten gespart werden, da der erfindungsgemäße Herstellungsprozess eine präziser auf die Bauteilfestigkeitsanforderungen der jeweiligen Anwendung abgestimmte Fertigung des Faserverbundmaterials erlaubt. Durch den Herstellungsprozess der vorliegenden Erfindung kann zudem die Fertigungszeit von faserverstärkten Filtertrommelelementen verringert werden, was sich auch positiv auf den nachgelagerten Fertigungsprozess von kompletten Filtervorrichtungen auswirkt.

Ein Herstellungsverfahren eines faserverstärkten Filtertrommelelements für eine Filtervorrichtung gemäß der vorliegenden Erfindung kann aufweisen: einen Schritt des Bereitstellens einer Formeinrichtung mit einem Außenkonturelement und einem Innenkonturelement, wobei das Außenkonturelement und das Innenkonturelement derart zueinander komplementär ausgebildet sind und angeordnet werden, dass das Außenkonturelement und das Innenkonturelement einen Formhohlraum in Gestalt des herzustellenden faserverstärkten Filtertrommelelements zwischen dem Außenkonturelement und dem Innenkonturelement definieren, wobei der Formhohlraum einen ersten Endabschnitt und einen zweiten Endabschnitt aufweist, einen Schritt des Anordnens von Verstärkungsfasern innerhalb des Formhohlraums, einen Schritt des Einbringens eines Matrixmaterials in den Formhohlraum mittels Schwerkraftwirkung auf das Matrixmaterial und/oder mittels einer durch eine Druckdifferenzerzeugungseinrichtung erzeugten Druckdifferenz zwischen dem ersten Endabschnitt und dem zweiten Endabschnitt des Formhohlraums, um den Formhohlraum mit Matrixmaterial zu füllen und die im Formhohlraum angeordneten Verstärkungsfasern mit Matrixmaterial zu umgeben, und einen Schritt des Aushärtens des Matrixmaterials, um das faserverstärkte Filtertrommelelement herzustellen.

In einer beispielhaften Ausgestaltung kann das Bereitstellen der Formeinrichtung mit einem Außenkonturelement und einem Innenkonturelement und das Anordnen von Verstärkungsfasern innerhalb des Formhohlraums aufweisen: Anordnen des Innenkonturelements, Anordnen von Verstärkungsfasern entlang des Innenkonturelements, Anordnen des Außenkonturelements komplementär zum Innenkonturelement, um den Formhohlraum mit den darin angeordneten Verstärkungsfasern zu bilden. Die Verstärkungsfasern können beispielsweise können beispielsweise Glasfasern, Karbonfaser, Aramidfasern (z.B. Kevlar-Fasern), Stahlfasern oder eine Mischung daraus aufweisen. Die Verstärkungsfasern V können als lose Fasern oder Fasermatten oder dergleichen vorliegen. Zum Beispiel kann das Anordnen von Verstärkungsfasern das Anordnen der Verstärkungsfasern in Form von Fasermatten in einer oder mehreren Lagen im Abstand voneinander aufweisen. Dies kann beispielsweise unter Verwendung von Abstandshaltern zur Distanzhaltung zwischen den mehreren Lagen aus Fasermatten umgesetzt werden. Durch die Verwendung von Fasermatten kann eine präzise Anordnung der Verstärkungsfasern im fertigen Bauteil erzielt werden, was die Fertigungsqualität verbessert. Zudem können optimierte Geometrien, Anordnungen und Beschaffenheit von Verstärkungsfasern präzise umgesetzt werden, wodurch eine gewünschte hohe Bauteilfestigkeit erzielt werden kann und wodurch die Bauteildicke optimiert (d.h. z.B. verkleinert) werden kann, was Material und Kosten spart.

In einer weiteren beispielhaften Ausgestaltung kann das Einbringen des Matrixmaterials in den Formhohlraum mittels der Druckdifferenz zwischen dem ersten Endabschnitt und dem zweiten Endabschnitt des Formhohlraums mindestens eines von (a) dem Befüllen des Formhohlraums mit Matrixmaterial durch Ansaugen des Matrixmaterial in den Formhohlraum mittels eines an den Formhohlraum angelegten Unterdrucks und (b) dem Befüllen des Formhohlraums mit Matrixmaterial durch Injizieren des Matrixmaterials mit Druck in den Formhohlraum aufweisen.

In noch einer weiteren beispielhaften Ausgestaltung können das Außenkonturelement und das Innenkonturelement so angeordnet werden, dass sie sich mit ihrer Längserstreckung entlang einer Vertikalrichtung erstrecken. Mit anderen Worten können das Außenkonturelement und das Innenkonturelement in einer aufrechtstehenden Anordnung / Stellung angeordnet werden. Bei einer solchen Anordnung kann das Matrixmaterial anhand des erzeugten Unterdrucks und/oder des auf das Matrixmaterial aufgebrachten Drucks den Formhohlraum von unten nach oben entlang der Vertikalrichtung füllen. Zusätzlich oder alternativ kann bei einer solchen Anordnung das Matrixmaterial anhand Schwerkraftwirkung den Formhohlraum von oben nach unten füllen. Die Formeinrichtung mit dem Außenkonturelement und dem Innenkonturelement kann in einem weiteren Beispiel aber auch mit ihrer Längserstreckung schräg oder geneigt zur Vertikalrichtung oder senkrecht zur Vertikalrichtung (d.h. z.B. in horizontaler Anordnung / Stellung) angeordnet werden. Die Formeinrichtung mit dem Außenkonturelement und dem Innenkonturelement kann drehbar abgestützt werden, so dass das Außenkonturelement und das Innenkonturelement gemeinsam in Rotation versetzt werden können (z.B. mittels einer Rotationsantriebseinheit).

Durch Vakuumfüllen des Matrixmaterials M in den Formhohlraum können möglicherweise vorhandene Gaseinschlüsse so vergrößert werden, dass die daraus entstehenden Blasen aus der noch flüssigen Matrix gefördert werden (z.B. sich in der hierin beschriebenen aufrecht stehenden Anordnung nach oben bewegen). Ferner können Hohlräume besser ausgefüllt werden (beispielsweise durch langsames Füllen der Hohlräume statisch von unten nach oben). Auf diese Weise kann in vorteilhafter Weise ein nach dem Füllvorgang entspanntes Matrixmaterial mit sehr wenigen Gaseinschlüssen oder zumindest im Wesentlichen ohne Gaseinschlüsse gebildet werden. Hierdurch kann können Fehlstellen (z.B. Gaseinschlüsse) im ausgehärteten Matrixmaterial vermieden werden, was in einer hohen Festigkeit und hohen Korrosionsbeständigkeit resultiert.

Die Druckdifferenzerzeugungseinrichtung kann in einer beispielhaften Ausgestaltung eine Vakuumpumpe aufweisen oder sein und in solch einem Fall kann das Herstellungsverfahren in einer beispielhaften Ausgestaltung ferner aufweisen: Abdichten des Formhohlraums, Verbinden des ersten Endabschnitts des Formhohlraums mit einem Ansauganschluss der Vakuumpumpe, Verbinden des zweiten Endabschnitts des Formhohlraums mit einer Vorratseinrichtung, in welcher ein Matrixmaterial bevorratet ist, und Erzeugen von Unterdruck mittels der Vakuumpumpe und Ansaugen des Matrixmaterials aus der Vorratseinrichtung mittels des erzeugten Unterdrucks in den Formhohlraum.

Die Druckdifferenzerzeugungseinrichtung kann in einer weiteren beispielhaften Ausgestaltung eine das Matrixmaterial mit Druck beaufschlagende Druckbeaufschlagungseinrichtung aufweisen oder sein. Die Druckbeaufschlagungseinrichtung kann beispielweise eine das Matrixmaterial mit Druck beaufschlagende Pumpe und/oder einen druckbeaufschlagen Vorlagebehälter welcher mit Matrixmaterial gefüllt ist und dazu eingerichtet ist, mittels Druck (z.B. mittels pneumatischen Druck (beispielsweise Gasdruck) oder mit einem Druckstempel) beaufschlagt zu werden, aufweisen. In einem Beispiel mit einer Pumpe kann das Herstellungsverfahren in einer weiteren beispielhaften Ausgestaltung ferner aufweisen: Abdichten des Formhohlraums, Verbinden von einem von dem ersten und dem zweiten Endabschnitt des Formhohlraums mit einem Druckanschluss der Pumpe, und Injizieren von Matrixmaterial mittels der Pumpe in den Formhohlraum, um mit Druck das Matrixmaterial in den Formhohlraum zu füllen. In einem Beispiel kann das Herstellungsverfahren ferner das Verbinden eines Sauganschluss der Pumpe mit einer Vorratseinrichtung, in welcher ein Matrixmaterial bevorratet ist, aufweisen.

In einem Beispiel mit einem druckbeaufschlagen Vorlagebehälter kann das Herstellungsverfahren in einer weiteren beispielhaften Ausgestaltung ferner aufweisen: Abdichten des Formhohlraums, Verbinden von einem von dem ersten und dem zweiten Endabschnitt des Formhohlraums mit einem Druckanschluss des Vorlagebehälters, und Injizieren von Matrixmaterial mittels des Vorlagebehälters in den Formhohlraum, um mit Druck das Matrixmaterial in den Formhohlraum zu füllen.

In einer weiteren Ausgestaltung kann die Druckerzeugungseinrichtung Kombinationen aus der Vakuumpumpe, der Pumpe und dem Vorlagebehälter aufweisen. Beispielsweise kann die Druckerzeugungseinrichtung sowohl eine Vakuumpumpe als auch eine Pumpe oder einen Vorlagebehälter aufweisen. Bei Vorsehen einer Vakuumpumpe und einer Pumpe kann das Herstellungsverfahren zum Beispiel aufweisen: das Verbinden von einem von dem ersten und dem zweiten Endabschnitt des Formhohlraums mit einem Druckanschluss der Pumpe, das Verbinden des Sauganschlusses der Pumpe mit einer Vorratseinrichtung, in welcher ein Matrixmaterial bevorratet ist, das Verbinden von dem anderen von dem ersten und dem zweiten Endabschnitt des Formhohlraums mit einem mit einem Ansauganschluss der Vakuumpumpe, und das Injizieren von Matrixmaterial mit Druck über den einen von dem ersten und dem zweiten Endabschnitt des Formhohlraums mittels der Pumpe in den Formhohlraum und Ansaugen des Matrixmaterials mittels des erzeugten Unterdrucks in den Formhohlraum, um sowohl mit Unterdruck als auch mit Druck das Matrixmaterial in den Formhohlraum zu füllen. Bei Vorsehen einer Vakuumpumpe und eines Vorlagebehälters kann das Herstellungsverfahren zum Beispiel aufweisen: das Verbinden von einem von dem ersten und dem zweiten Endabschnitt des Formhohlraums mit einem Druckanschluss des Vorlagebehälters, das Verbinden von dem anderen von dem ersten und dem zweiten Endabschnitt des Formhohlraums mit einem mit einem Ansauganschluss der Vakuumpumpe, und das Injizieren von Matrixmaterial mit Druck über den einen von dem ersten und dem zweiten Endabschnitt des Formhohlraums mittels des Vorlagebehälters in den Formhohlraum und Ansaugen des Matrixmaterials mittels des erzeugten Unterdrucks in den Formhohlraum, um sowohl mit Unterdruck als auch mit Druck das Matrixmaterial in den Formhohlraum zu füllen.

In einer weiteren Ausgestaltung können der erste und der zweite Endabschnitt des Formhohlraums offen sein und kann das Herstellungsverfahren ferner aufweisen, nach dem Bereitstellen der Formeinrichtung mit einem Außenkonturelement und einem Innenkonturelement und dem Anordnen von Verstärkungsfasern innerhalb des Formhohlraums: Verbinden des Außenkonturelements und des Innenkonturelements an dem ersten und dem zweiten Endabschnitt des Formhohlraum miteinander mittels eines oder mehreren Endabschnittverbindungselementen, um den Formhohlraum an dem ersten und den zweiten Endabschnitt des Formhohlraums abzudichten und einen geschlossenen Formhohlraum zwischen dem Außenkonturelement und dem Innenkonturelement zu bilden, Einbringen von Durchgangsöffnungen in das Außenkonturelement, das Innenkonturelement und/oder das eine oder die mehreren Endabschnittverbindungselemente, und Einbringen des Matrixmaterials über die eingebrachten Durchgangsöffnungen. Die Endabschnittverbindungselemente können zum Beispiel dazu eingerichtet sein, dass sie den Formhohlraum radial und/oder in Umfangsrichtung abdichten, um den geschlossenen Formhohlraum zwischen dem Außenkonturelement und dem Innenkonturelement zu bilden.

In einer weiteren Ausgestaltung können der erste und der zweite Endabschnitt des Formhohlraums offen sein und kann das Herstellungsverfahren ferner aufweisen, nach dem Bereitstellen der Formeinrichtung mit einem Außenkonturelement und einem Innenkonturelement und dem Anordnen von Verstärkungsfasern innerhalb des Formhohlraums: lösbares Anbringen mindestens eines Abdeckelements an dem Außenkonturelement und dem Innenkonturelement, um den Formhohlraum an dem ersten und den zweiten Endabschnitt des Formhohlraums abzudichten und einen geschlossenen Formhohlraum zwischen dem Außenkonturelement und dem Innenkonturelement zu bilden, Einbringen des Matrixmaterials über das mindestens eine Abdeckelement, und Lösen des mindestens einen Abdeckelements von dem Außenkonturelement und dem Innenkonturelement. Das mindesten eine Abdeckelement kann zum Beispiel dazu eingerichtet sein, den Formhohlraum radial und/oder in Umfangsrichtung abdichten, um einen geschlossenen Formhohlraum zwischen dem Außenkonturelement und dem Innenkonturelement zu bilden.

In einer weiteren Ausgestaltung kann mindestens eines von dem Außenkonturelement und dem Innenkonturelement aus mindestens einem von einem Kunststoffmaterial, optional einem Thermoplast, einem Metallmaterial und einem Einwegopfermaterial, optional einem Pappematerial, ausgebildet sein. Das Kunststoffmaterial und/oder das Metallmaterial kann dazu vorgesehen sein, einen Bestandteil des fertig hergestellten faserverstärkten Filtertrommelelement zu bilden. Das Einwegopfermaterial kann dazu vorgesehen sein, von dem fertig hergestellten faserverstärkten Filtertrommelelement entfernt zu werden. Beispielsweise können das Außenkonturelement und das Innenkonturelement jeweilig aus dem Kunststoffmaterial und/oder dem Metallmaterial ausgebildet sein und zusammen mit dem Faserverbundmaterial das fertigen faserverstärkten Filtertrommelelement bilden. In einem weiteren Beispiel können sowohl das Außenkonturelement als auch das Innenkonturelement aus Einwegopfermaterial ausgebildet sein. In noch einem weiteren Beispiel kann eines von dem Außenkonturelement und dem Innenkonturelement aus dem Einwegopfermaterial ausgebildet sein und kann das andere von dem Außenkonturelement und dem Innenkonturelement aus dem Kunststoffmaterial und/oder dem Metallmaterial ausgebildet sein.

In einer weiteren Ausgestaltung kann das Herstellungsverfahren der vorliegenden Erfindung das Anordnen einer Außenkontur-Stützstruktur zur Abstützung und Fixierung des Außenkonturelements und/oder das Anordnen einer Innenkontur-Stützstruktur zur Abstützung und Fixierung des Innenkonturelements aufweisen. Die Außenkontur-Stützstruktur kann beispielsweise an dem Außenkonturelement fest (z.B. durch Anlaminieren, Anschweißen, Ankleben) angebracht sein oder lösbar (z.B. mittels Schraub- oder Steckverbindungen) angebracht sein. Gleichermaßen kann die Innenkontur-Stützstruktur an dem Innenkonturelement fest oder lösbar angebracht sein. Zum Beispiel kann die Innenkontur-Stützstruktur mit dem Innenkonturelement verbunden oder damit als eine Einheit integriert, insbesondere einstückig, ausgebildet werden. Die Außenkontur-Stützstruktur und die Innenkontur-Stützstruktur können das Außenkonturelement und das Innenkonturelement derart komplementär zueinander angeordnet abstützen und fixieren, dass das Außenkonturelement und das Innenkonturelement den Formhohlraum in Gestalt des herzustellenden faserverstärkten Filtertrommelelements zwischen dem Außenkonturelement und dem Innenkonturelement bilden. Beispielsweise können die Außenkontur-Stützstruktur und die Innenkontur-Stützstruktur können das Außenkonturelement und das Innenkonturelement in einer vorbestimmten Anordnung, beispielsweise der zuvor beschriebenen aufrecht stehenden Anordnung (d.h. z.B. mit der Längserstreckung des Außenkonturelements und des Innenkonturelements entlang der Vertikalrichtung) oder einer belieben anderen Anordnung, abstützen und fixieren.

In noch einer weiteren Ausgestaltung kann das Herstellungsverfahren der vorliegenden Erfindung (beispielsweise nach dem Anordnen der Verstärkungsfasern und vor dem Einbringen des Matrixmaterials das Anordnen von rohrförmigen Elementen innerhalb des Formhohlraums, um Durchgangsöffnungen in dem hergestellten faserverstärkten Filtertrommelelement vorzusehen, aufweisen. Beispielsweise können Rohrstutzen oder Tüllen als die rohrförmigen Elemente zwischen die bereits angeordneten Verstärkungsfasern eingelegt werden. Durch Anordnen der rohrförmigen Elementen innerhalb des Formhohlraums noch vor dem Befüllen mit Matrixmaterial können definierte Öffnungen (z.B. Filtrationsöffnungen und dergleichen) in dem fertigen faserverstärkten Filtertrommelelement bereits im Fertigungsprozess vorgesehen werden, wodurch die Gefahr der Zerstörung der Gitter- und Faserstruktur der eingebetteten Verstärkungsfasern (insbesondere bei Fasermatten) bei einem nachträglichen Anbringen von Filtrationsbohrungen minimiert oder beseitigt werden kann. Die rohrförmigen Elementen können beispielsweise aus einem Kunststoffmaterial oder einem Metallmaterial (ausgebildet sein und dazu vorgesehen sein, einen Bestandteil des fertigen faserverstärkten Filtertrommelelement zu bilden. Hierdurch kann das rohrförmige Elemente bei Verschleiß auf einfache Weise und mit minimaler Beeinträchtigung des umliegenden Faserverbundwerkstoffs ausgetauscht werden.

In noch einer weiteren Ausgestaltung kann das Außenkonturelement eine äußere Mantelkonturwand und mindestens eine äußere Stirnwand-Konturwand aufweisen, welche eine Außenkontur eines Mantels und mindestes einer Stirnwand des herzustellenden faserverstärkten Filtertrommelelements definieren. Ferner kann das Innenkonturelement eine innere Mantelkonturwand und mindestens eine innere Stirnwand-Konturwand aufweisen, welche eine Innenkontur eines Mantels und mindestes einer Stirnwand des herzustellenden faserverstärkten Filtertrommelelements definieren.

Eine Vorrichtung zur Herstellung eines faserverstärkten Filtertrommelelements für eine Filtervorrichtung gemäß der vorliegenden Erfindung kann aufweisen: eine Formeinrichtung mit einem Außenkonturelement und einem Innenkonturelement, wobei das Außenkonturelement und das Innenkonturelement derart zueinander komplementär ausgebildet sind und angeordnet sind, dass das Außenkonturelement und das Innenkonturelement einen Formhohlraum in Gestalt des herzustellenden faserverstärkten Filtertrommelelements zwischen dem Außenkonturelement und dem Innenkonturelement definieren, wobei der Formhohlraum einen ersten Endabschnitt und einen zweiten Endabschnitt aufweist, und eine Druckdifferenzerzeugungseinrichtung, welche mit der Formvorrichtung fluidverbindbar ist, um eine Druckdifferenz zwischen dem ersten Endabschnitt und dem zweiten Endabschnitt des Formhohlraums derart zu erzeugen, dass ein Matrixmaterial mittels der Druckdifferenz in den Formhohlraum einbringbar ist, um den Formhohlraum mit Matrixmaterial zu füllen und die im Formhohlraum angeordneten Verstärkungsfasern mit Matrixmaterial zu umgeben.

Die Vorrichtung zur Herstellung eines faserverstärkten Filtertrommelelements für eine Filtervorrichtung gemäß der vorliegenden Erfindung kann ferner zur Durchführung eines hierin beschriebenen Herstellungsverfahrens gemäß der vorliegenden Erfindung eingesetzt werden.

Die Vorrichtung der vorliegenden Erfindung kann in einer beispielhaften Ausgestaltung eine Vorratseinrichtung, in welcher ein Matrixmaterial bevorratet ist, aufweisen.

Die Druckdifferenzerzeugungseinrichtung kann in einer beispielhaften Ausgestaltung der Vorrichtung eine Vakuumpumpe aufweisen, mittels welcher ein Unterdruck zum Ansaugen des Matrixmaterials aus der Vorratseinrichtung in den Formhohlraum erzeugbar ist, um den Formhohlraum mit Matrixmaterial aus der Vorratseinrichtung mittels des erzeugten Unterdrucks zu füllen.

Die Druckdifferenzerzeugungseinrichtung kann in einer weiteren beispielhaften Ausgestaltung der Vorrichtung zusätzlich oder alternativ eine Pumpe aufweisen, wobei ein Sauganschluss der Pumpe mit der Vorratseinrichtung verbunden ist und ein Druckanschluss der Pumpe mit dem Formhohlraum verbunden ist, wobei die Pumpe dazu eingerichtet ist, aus der Vorratseinrichtung angesaugtes Matrixmaterial in den Formhohlraum zu injizieren, um den Formhohlraum mit Matrixmaterial zu füllen.

Die Druckdifferenzerzeugungseinrichtung kann in noch einer weiteren beispielhaften Ausgestaltung der Vorrichtung zusätzlich oder alternativ einen druckbeaufschlagten Vorlagebehälter aufweisen, welcher mit Matrixmaterial gefüllt ist und mittels Druck beaufschlagbar ist, um das Matrixmaterial aus dem Vorlagebehälter herauszudrücken und das herausgedrückte Matrixmaterial in den Formhohlraum zu injizieren, um den Formhohlraum mit Matrixmaterial zu füllen.

Die Vorrichtung der vorliegenden Erfindung kann in einer beispielhaften Ausgestaltung eine Stützeinrichtung aufweisen, welche mindestens eine von einer Außenkontur-Stützstruktur zur Abstützung und Fixierung des Außenkonturelements und einer Innenkontur-Stützstruktur zur Abstützung und Fixierung des Innenkonturelements aufweist.

Gemäß der vorliegenden Erfindung kann ein Filtertrommelelement für eine Filtervorrichtung bereitgestellt sein, welches mittels eines hierin beschriebenen Herstellungsverfahrens gemäß der vorliegenden Erfindung hergestellt ist. Das Filtertrommelelement kann eine Halbtrommel oder Volltrommel einer Trommelfiltervorrichtung oder einer Zentrifugenvorrichtung bilden.

### Kurze Beschreibung der Zeichnungen

Die Erfindung wird nachfolgend anhand von Ausführungsbeispielen mit Bezugnahme auf die Zeichnungen erläutert. Diese Ausführungsbeispiele sollen die Erfindung nicht einschränken, sondern dem Fachmann nur Möglichkeiten erläutern, wie die Erfindung ausgeführt werden kann. In den Zeichnungen werden über deren sämtliche Figuren hinweg für gleiche Bauteile die gleichen Bezugszeichen verwendet. In den Zeichnungen zeigen:
Figur 1 eine schematische Schnittansicht der Vorrichtung zur Herstellung eines faserverstärktes Filtertrommelelements für eine Filtervorrichtung gemäß Ausführungsformen der vorliegenden Erfindung entlang deren Längserstreckung (siehe Linie B-B in Figur 2),
Figur 2 eine schematische Schnittansicht eine Formeinrichtung der Vorrichtung gemäß Ausführungsformen der vorliegenden Erfindung (ohne Stützstrukturen) senkrecht zur Längserstreckung entlang der Schnittlinie A-A in Figur 1,
Figur 3 schematisch eine weitere beispielhafte Ausgestaltung der Formeinrichtung der Vorrichtung gemäß einer weiteren Ausführungsform der vorliegenden Erfindung zur Herstellung einer Volltrommel,
Figur 4 eine schematische Schnittansicht der Vorrichtung zur Herstellung eines faserverstärktes Filtertrommelelements für eine Filtervorrichtung gemäß einer weiteren Ausführungsform der vorliegenden Erfindung,
Figur 5 eine schematische Schnittansicht der Vorrichtung zur Herstellung eines faserverstärktes Filtertrommelelements für eine Filtervorrichtung gemäß einer weiteren Ausführungsform der vorliegenden Erfindung,
Figur 6 eine schematische Schnittansicht der Vorrichtung zur Herstellung eines faserverstärktes Filtertrommelelements für eine Filtervorrichtung gemäß einer weiteren Ausführungsform der vorliegenden Erfindung,
Figur 7 eine schematische Schnittansicht der Vorrichtung zur Herstellung eines faserverstärktes Filtertrommelelements für eine Filtervorrichtung gemäß einer weiteren Ausführungsform der vorliegenden Erfindung,
Figur 8 ein Flussdiagramm eines Herstellungsverfahrens eines faserverstärkten Filtertrommelelements für eine Filtervorrichtung gemäß Ausführungsformen der vorliegenden Erfindung,
Figur 9 einen Zustand in dem Herstellungsverfahren gemäß der vorliegenden Erfindung vor dem Einbringen eines Matrixmaterials in den Formhohlraum,
Figur 10 das Einbringen eines Matrixmaterials in den Formhohlraum bei dem Herstellungsverfahren gemäß der vorliegenden Erfindung,
Figur 11(a) und 11(b) schematische Schnittansichten der fertig hergestellte faserverstärkte Filtertrommelelemente gemäß dem Herstellungsverfahren der vorliegenden Erfindung entlang deren Längserstreckung (analog zu Figur 1).

Es ist zu verstehen, dass die angehängten Zeichnungen nicht notwendigerweise maßstabsgetreu sind und eine etwas vereinfachte Darstellungsweise von verschiedenen Eigenschaften darstellen, um die Grundprinzipien der Erfindung aufzuzeigen.

### Detaillierte Beschreibung

Es wird nun im Detail Bezug auf verschiedene Ausführungsformen der vorliegenden Erfindung genommen, von denen Beispiele in den beigefügten Zeichnungen dargestellt und im Folgenden beschrieben werden. Obwohl die Erfindung in Verbindung mit den beispielhaften Ausführungsformen beschrieben wird, ist es klar, dass die vorliegende Beschreibung nicht dazu gedacht ist, die Erfindung auf diese beispielhaften Ausführungsformen zu beschränken.

Der Ausdruck "axial" ist in dieser Anmeldung jeweils auf eine Axialrichtung bezogen und z.B. als in der Axialrichtung oder zur Axialrichtung parallel verlaufend zu verstehen, und der Ausdruck "radial" oder "Radialrichtung" ist in dieser Anmeldung ebenfalls jeweils auf die Axialrichtung bezogen und damit als radial zu dieser Axialrichtung zu verstehen.

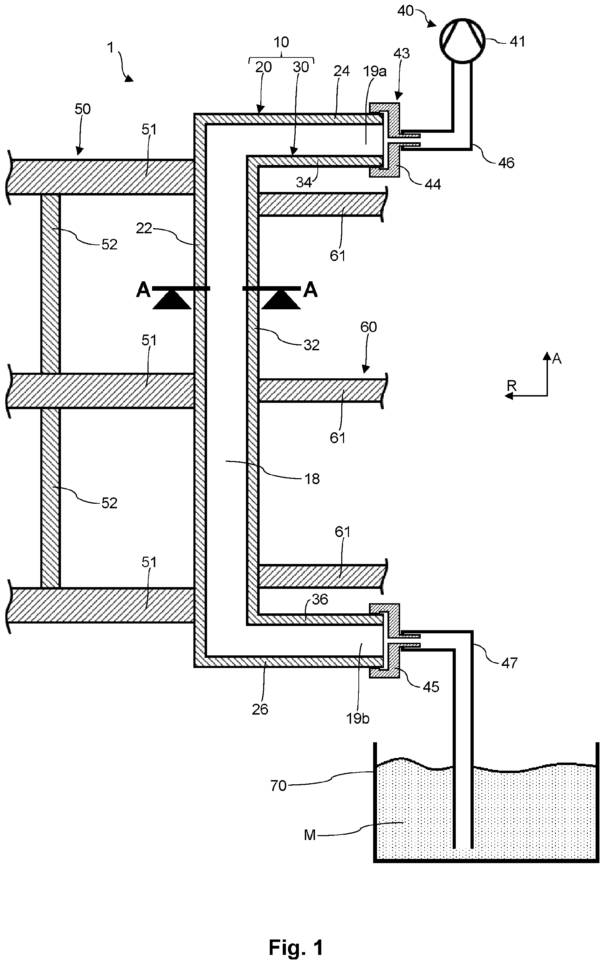

Nachfolgend wird zunächst unter Bezugnahme auf Figuren 1 bis 7 eine Vorrichtung 1 zur Herstellung eines faserverstärktes Filtertrommelelements für eine Filtervorrichtung gemäß Ausführungsformen der vorliegenden Erfindung beschrieben.

Wie unter Bezugnahme auf Figuren 1 bis 7 dargestellt, kann eine Vorrichtung 1 zur Herstellung eines faserverstärktes Filtertrommelelements für eine Filtervorrichtung gemäß Ausführungsformen der vorliegenden Erfindung aufweisen: eine Formeinrichtung 10 mit einem Außenkonturelement 20 und einem Innenkonturelement 30, eine Stützeinrichtung, eine Druckdifferenzerzeugungseinrichtung 40, eine Abdichtungseinrichtung 43 und/oder eine Vorratseinrichtung 70. Einzelne der genannten Bestandteile der in den Figuren gezeigten Vorrichtung 1 können wegelassen werden. Beispielsweise kann bei der später beschriebenen Nutzung von Schwerkraftwirkung zum Einbringen eines Matrixmaterials M die Druckdifferenzerzeugungseinrichtung 40 weggelassen werden. Ferner kann bei Nutzung eines später beschriebenen Vorlagebehälters die Vorratseinrichtung 70 weggelassen werden. Bei einer freistehenden Struktur der Formeinrichtung 10 kann die Stützeinrichtung weggelassen werden. Es versteht sich somit, dass die genannten Bestandteile der in den Figuren gezeigten Vorrichtung 1 optional sind.

Das Außenkonturelement 20 und das Innenkonturelement 30 der Formeinrichtung 10 können zueinander komplementär ausgebildet sein. Mit anderen Worten können das Außenkonturelement 20 und das Innenkonturelement 30 eine zueinander komplementäre Gestalt aufweisen, so dass das Außenkonturelement 20 und das Innenkonturelement 30 einen (z.B. Gieß-)Formhohlraum 18 in Gestalt des herzustellenden faserverstärkten Filtertrommelelements zwischen dem Außenkonturelement 20 und dem Innenkonturelement 30 definieren bzw. bilden.

Das durch die Vorrichtung 1 der vorliegenden Erfindung herzustellende faserverstärkte Filtertrommelelement kann beispielsweise die Gestalt einer Halbtrommel (d.h. z.B. einer Trommelhälfte) oder einer Volltrommel (d.h. z.B. einer vollständigen, geschlossenen Trommel) aufweisen. Das herzustellende faserverstärkte Filtertrommelelement kann zum Beispiel einen sich in einer Axialrichtung (siehe Pfeil A in Figur 1) erstreckenden Trommelmantel und eine oder mehrere sich in einer zur Axialrichtung senkrechten (d.h. radialen) Radialrichtung (siehe Pfeil R in Figur 1) erstreckende Trommelstirnwände (auch z.B. Trommelbordwände genannt) an den Trommelmantelenden aufweisen. Das Außenkonturelement 20 und das Innenkonturelement 30 können daher eine dazu passenden Formhohlraum bilden. Hierzu können das Außenkonturelement 20 und das Innenkonturelement 30 eine derart zueinander komplementäre Gestalt aufweisen, dass der Formhohlraum die beabsichtigte Gestalt des herzustellenden faserverstärkten Filtertrommelelements aufweist. Das Außenkonturelement 20 und das Innenkonturelement 30 können daher in zum herzustellenden faserverstärkten Filtertrommelelement entsprechender Weise Wandabschnitte, welche sich in der Axialrichtung erstrecken, und Wandabschnitte, welche sich in der Radialrichtung erstrecken, aufweisen. Für die Herstellung komplexerer Trommelstrukturen können auch zur Axialrichtung und/oder zur Radialrichtung schräg verlaufende Wandabschnitte in dem Außenkonturelement 20 und/oder in dem Innenkonturelement 30 vorgesehen werden.

In dem Formhohlraum können (später im Detail beschriebene) Verstärkungsfasern angeordnet werden. Der Formhohlraum kann zur Ausbildung der Gestalt des herzustellenden faserverstärkten Filtertrommelelements während des Herstellungsvorgangs mit (später im Detail beschriebenem) Matrixmaterial M gefüllt werden.

Das Außenkonturelement 20 kann zum Beispiel eine äußere Mantelkonturwand 22 und mindestens eine äußere Stirnwand-Konturwand, beispielsweise eine erste äußere Stirnwand-Konturwand 24 und eine zweite äußere Stirnwand-Konturwand 26, aufweisen. Das Außenkonturelement 20 kann mittels der äußeren Mantelkonturwand 22 eine Außenkontur eines Mantels des herzustellenden faserverstärkten Filtertrommelelements definieren. Das Außenkonturelement 20 kann mittels der mindestens einen äußeren Stirnwand-Konturwand 24 eine Außenkontur mindestes einer Stirnwand (auch Bordwand genannt) des herzustellenden faserverstärkten Filtertrommelelements definieren. Die erste äußere Stirnwand-Konturwand 24 kann mit einem ersten Ende (z.B. einem ersten Ende entlang der Längserstreckung des Außenkonturelements) der äußeren Mantelkonturwand 22 verbunden sein, und die zweite äußere Stirnwand-Konturwand 26 kann mit einem dem ersten Ende gegenüberliegenden zweiten Ende (z.B. einem entlang der Längserstreckung des Außenkonturelements gegenüberliegenden zweiten Ende) der äußeren Mantelkonturwand 22 verbunden sein.

Das Innenkonturelement 30 kann eine innere Mantelkonturwand 32 und mindestens eine innere Stirnwand-Konturwand beispielsweise eine erste innere Stirnwand-Konturwand 34 und eine zweite innere Stirnwand-Konturwand 36, aufweisen. Das Innenkonturelement 30 kann mittels der inneren Mantelkonturwand 32 eine Innenkontur eines Mantels des herzustellenden faserverstärkten Filtertrommelelements definieren. Das Innenkonturelement 30 kann mittels der mindestens einen inneren Stirnwand-Konturwand 34 eine Innenkontur mindestes einer Stirnwand des herzustellenden faserverstärkten Filtertrommelelements definieren. Die erste innere Stirnwand-Konturwand 34 kann mit einem ersten Ende (z.B. einem ersten Ende entlang der Längserstreckung des Außenkonturelements) der inneren Mantelkonturwand 32 verbunden sein, und die zweite innere Stirnwand-Konturwand 36 kann mit einem dem ersten Ende gegenüberliegenden zweiten Ende (z.B. einem entlang der Längserstreckung des Außenkonturelements gegenüberliegenden zweiten Ende) der inneren Mantelkonturwand 32 verbunden sein.

Es versteht sich, dass die konkrete Gestalt des Außenkonturelements 20 und des Innenkonturelements 30 von der Gestalt des herzustellenden faserverstärkten Filtertrommelelements abhängt. Beispielsweise können Filtertrommeln für Filtertrommelvorrichtungen beidseits Stirnwände an den Enden des Mantels aufweisen, wobei Filtertrommeln für Filterzentrifugenvorrichtungen (insbesondere für Schubzentrifugen) nur einseitig eine Stirnwand an einem Ende des Mantels aufweisen kann. Komplexere Trommelstrukturen können ferner auch noch weitere Wandabschnitte, beispielsweise schrägverlaufende Wandabschnitte und/oder vorkragende Wandabschnitt und/oder Vertiefungen, Rillen oder Nuten aufweisen. Je nach Art des herzustellenden faserverstärkten Filtertrommelelements können somit das Außenkonturelement 20 und das Innenkonturelement 30 diverse zueinander komplementäre Gestalten aufweisen.

Der durch das Außenkonturelement 20 und das Innenkonturelement 30 gebildete Formhohlraum 18 kann einen ersten Endabschnitt 19a und einen zweiten Endabschnitt 19b aufweisen (siehe Figur 1). Der erste Endabschnitt 19a des Formhohlraums 18 kann zwischen der ersten äußeren Stirnwand-Konturwand 32 des Außenkonturelements 20 und der ersten inneren Stirnwand-Konturwand 34 des Innenkonturelement 30 angeordnet sein, und der zweite Endabschnitt 19b des Formhohlraums 18 kann zwischen der zweiten äußeren Stirnwand-Konturwand 34 des Außenkonturelements 20 und der zweiten inneren Stirnwand-Konturwand 36 des Innenkonturelement 30 angeordnet sein. Der erste Endabschnitt 19a und der zweite Endabschnitt 19b können entlang der Längserstreckung des Außenkonturelements 20 und des Innenkonturelements 30 zueinander im Abstand angeordnet sein. Der erste Endabschnitt 19a und der zweite Endabschnitt 19b können (z.B. radial einwärts) offen sein, beispielsweise eine offene Stirnfläche des Formhohlraums 18 aufweisen. Mit anderen Worten kann der Formhohlraum 18 radial (z.B. radial einwärts) über den ersten Endabschnitt 19 und den zweiten Endabschnitt 19b, welche offen sind, ausmünden.

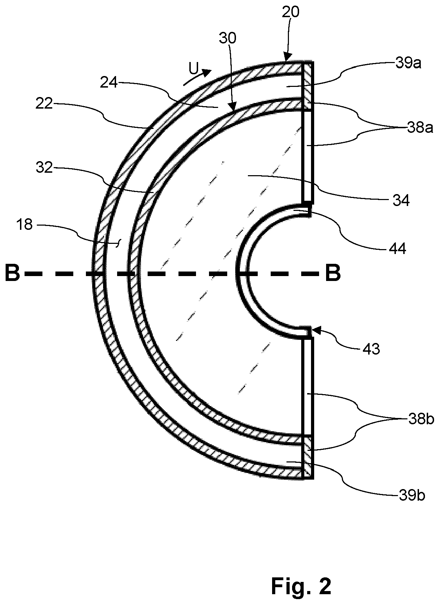

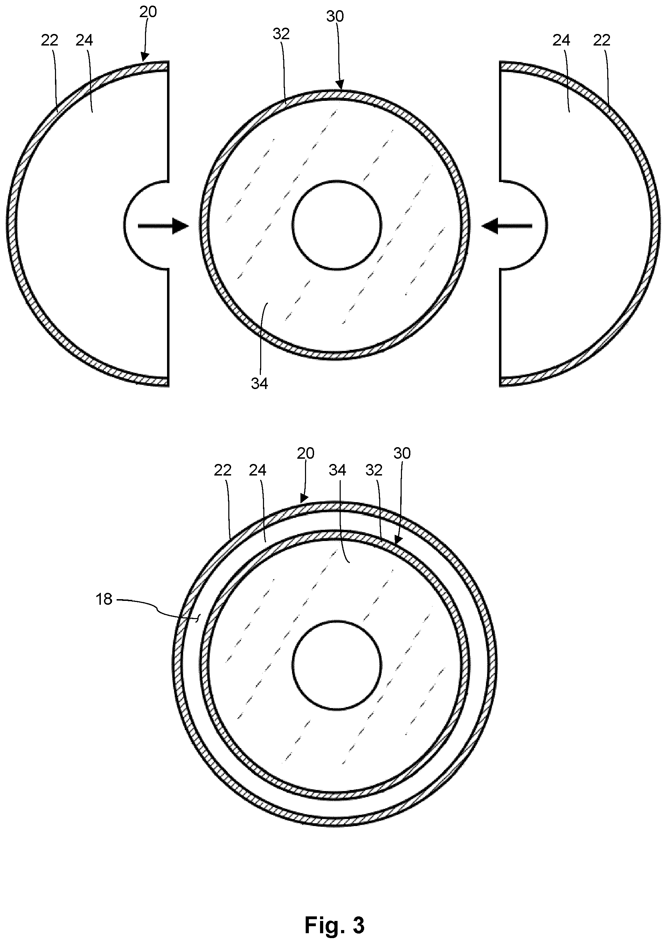

Die in Figuren 1 und 2 dargestellte Vorrichtung 1 ist ein Beispiel für eine Vorrichtung 1 zur Herstellung eines Halbtrommelelements. Figur 1 stellt eine Schnittansicht der Vorrichtung 1 entlang einer Längserstreckung des herzustellenden Halbtrommelelements bzw. der Längserstreckung der Formeinrichtung 10 der Vorrichtung 1 dar (siehe Schnittlinie B-B in Figur 2). Figur 2 stellt eine Schnittansicht einer Formeinrichtung 10 der Vorrichtung 1 (ohne Stützstrukturen) senkrecht zur Längserstreckung entlang der Schnittlinie A-A in Figur 1 dar. In einer Variante nach Figur 3 kann die Vorrichtung 1 zur Herstellung einer Volltrommel eingerichtet sein.

Das Außenkonturelement 20 und das Innenkonturelement 30 können wie in den Figuren gezeigt zur Herstellung einer Halbtrommel ausgestaltet sein. Beispielsweise kann das Außenkonturelement 20 eine halb-hohlzylindrische (d.h. z.B. in Gestalt einer Hohlzylinderhälfte) äußere Mantelkonturwand 22 und äußere Stirnwand-Konturwänden 24, 26 in einer Halbringscheibenform (d.h. z.B. in Gestalt einer zumindest im Wesentlichen halben Ringscheibe) aufweisen. Konzentrisch dazu und mit kleinerem Durchmesser/Abmessungen kann das Innenkonturelement 30 eine halb-hohlzylindrische innere Mantelkonturwand 32 und innere Stirnwand-Konturwänden 34, 36 in einer zumindest im Wesentlichen Halbringscheibenform aufweisen. Zur Abdichtung des der Halbtrommel entsprechenden Formhohlraums 18 in Radialrichtung kann die Abdichtungseinrichtung 43 vorgesehen sein. Zur Abdichtung des der Halbtrommel entsprechenden Formhohlraums 18 in einer Umfangsrichtung der Formeinrichtung (Pfeil U in Figur 2) können Abschlusselemente 38a, 38b (z.B. Konturwandelemente) vorgesehen sein. Das erste Abschlusselement 38a kann beispielsweise an einem ersten Ende 39a der Formeinrichtung 10 in der Umfangsrichtung mit dem Außenkonturelement 20 und dem Innenkonturelement 30 verbunden sein und einen Abschluss des Formhohlraums 18 in Umfangsrichtung bilden, um den Formhohlraum 18 in Umfangsrichtung zu verschließen. Das zweite Abschlusselement 38a kann beispielsweise an einem zweiten Ende 39b der Formeinrichtung 10 in zur Umfangsrichtung entgegengesetzter Richtung mit dem Außenkonturelement 20 und dem Innenkonturelement 30 verbunden sein und einen Abschluss des Formhohlraums 18 in zur Umfangsrichtung entgegengesetzter Richtung bilden, um den Formhohlraum 18 in zur Umfangsrichtung entgegengesetzter Richtung zu verschließen. In einer alternativen Ausgestaltung kann die Abdichtungseinrichtung 43 als ein Abdeckelement ausgebildet sein, welches so ausgestaltet ist, dass es die Mündungsflächen des Formhohlraums 18 sowohl in Umfangsrichtung als auch in Radialrichtung der Formeinrichtung 10 abdecken und verschließen kann.

Das Außenkonturelement 20 und das Innenkonturelement 30 können wie in Figur 3 gezeigt zur Herstellung einer Volltrommel ausgestaltet sein. Beispielsweise kann das Außenkonturelement 20 eine hohlzylindrische äußere Mantelkonturwand 22 und äußere Stirnwand-Konturwänden 24, 26 in einer Ringscheibenform aufweisen. Konzentrisch dazu und mit kleinerem Durchmesser/Abmessungen kann das Innenkonturelement 30 eine hohlzylindrische innere Mantelkonturwand 32 und innere Stirnwand-Konturwänden 34, 36 in einer Ringscheibenform aufweisen. Das Außenkonturelement 20 kann zur Anordnung um das Innenkonturelement 30 herum in Form von zwei Halbschalen ausgebildet sein, welche um das Innenkonturelement 30 herum geschlossen und miteinander verbunden werden können (siehe Pfeile und Übergang von der oberen Darstellung zur unteren Darstellung in Figur 3).

Das Außenkonturelement 20 kann durch ein Kunststoffmaterial, ein Metallmaterial und/oder ein Einwegopfermaterial ausgebildet sein. Das Kunststoffmaterial kann beispielsweise ein gegen die für die Anwendung des herzustellenden faserverstärkten Filtertrommelelements auftretenden Umgebungsbedingungen beständiges Kunststoffmaterial sein, beispielsweise ein korrosions- und/oder lösungsmittelbeständiges Kunststoffmaterial sein. Das Kunststoffmaterial kann ein Thermoplast sein, zum Beispiel ein Polypropylen, Polyethylen (PE), Polyvinylchlorid (PVC) und dergleichen. Das Metallmaterial kann beispielsweise ein gegen die für die Anwendung des herzustellenden faserverstärkten Filtertrommelelements auftretenden Umgebungsbedingungen beständiges Metallmaterial sein, beispielsweise ein korrosions- und/oder lösungsmittelbeständiges Metallmaterial sein. Das Metallmaterial kann beispielsweise Edelstahl sein. Ein aus Kunststoffmaterial oder Metallmaterial ausgebildetes Außenkonturelement 20 kann dazu vorgesehen sein, einen Bestandteil des fertigen faserverstärkten Filtertrommelelement zu bilden. Beispielsweise kann ein aus Kunststoffmaterial oder Metallmaterial ausgebildetes Außenkonturelement 20 eine Außenverkleidung aus Kunststoffmaterial oder Metallmaterial, welche einstückig mit dem Faserverbundmaterial der fertigen faserverstärkten Filtertrommelelement ausgebildet ist, bilden. Das Einwegopfermaterial kann beispielsweise ein Pappematerial oder dergleichen sein. Ein aus Einwegopfermaterial ausgebildetes Außenkonturelement 20 kann von dem fertigen faserverstärkten Filtertrommelelement nach dem Aushärten des Faserverbundmaterials entfernt werden.

Wie das Außenkonturelement 20 kann das Innenkonturelement 30 durch ein Kunststoffmaterial, Metallmaterial oder ein Einwegopfermaterial ausgebildet sein. Ein aus Kunststoffmaterial oder Metallmaterial ausgebildetes Innenkonturelement 30 kann dazu vorgesehen sein, einen Bestandteil des fertigen faserverstärkten Filtertrommelelement zu bilden. Beispielsweise kann ein aus Kunststoffmaterial oder Metallmaterial ausgebildetes Innenkonturelement 30 eine Innenverkleidung aus Kunststoffmaterial oder Metallmaterial, welche einstückig mit dem Faserverbundmaterial der fertigen faserverstärkten Filtertrommelelement ausgebildet ist, bilden. Ein aus Einwegopfermaterial ausgebildetes Innenkonturelement 30 kann von dem fertigen faserverstärkten Filtertrommelelement nach dem Aushärten des Faserverbundmaterials entfernt werden.

Das faserverstärkte Filtertrommelelement kann durch beliebige Materialkombinationen für das Außenkonturelement 20 und das Innenkonturelement 30 ausgebildet sein. Beispielsweise können das Außenkonturelement 20 und das Innenkonturelement 30 jeweilig aus dem Kunststoffmaterial und/oder dem Metallmaterial ausgebildet sein und zusammen mit dem Faserverbundmaterial das fertigen faserverstärkten Filtertrommelelement bilden. In einem weiteren Beispiel können sowohl das Außenkonturelement 20 als auch das Innenkonturelement 30 aus Einwegopfermaterial ausgebildet sein. In noch einem weiteren Beispiel kann eines von dem Außenkonturelement 20 und dem Innenkonturelement 30 aus dem Einwegopfermaterial ausgebildet sein und kann das andere von dem Außenkonturelement 20 und dem Innenkonturelement 30 aus dem Kunststoffmaterial und/oder dem Metallmaterial ausgebildet sein.

Die Stützeinrichtung kann mindestens eine von einer Außenkontur-Stützstruktur 50 und einer Innenkontur-Stützstruktur 60 aufweisen.

Die Außenkontur-Stützstruktur 50 kann zur Abstützung und Fixierung des Außenkonturelements 20 eingerichtet sein. Beispielsweise kann die Außenkontur-Stützstruktur 50 mehrere äußere Stützstreben 51 aufweisen, welche sich radial nach außen bezüglich des Außenkonturelements 20 erstrecken und mit dem Außenkonturelement 20 verbunden sind. Die äußeren Stützstreben 51 können beispielsweise an dem Außenkonturelement 20 fest (z.B. durch Anlaminieren, Anschweißen, Ankleben) angebracht sein oder lösbar (z.B. mittels Schraub- oder Steckverbindungen) angebracht sein. Die äußeren Stützstreben 51 können sowohl in Axialrichtung voneinander im Abstand angeordnet sein, als auch in regelmäßigen oder unregelmäßigen Abständen entlang des Umfangs des Außenkonturelements 20 angeordnet sein. Zur Stabilisierung können die äußeren Stützstreben 51 über Verbindungsstreben 52 miteinander verbunden sein.

Die Innenkontur-Stützstruktur 60 kann zur Abstützung und Fixierung des Innenkonturelements 30 eingerichtet sein. Beispielsweise kann die Innenkontur-Stützstruktur 60 mehrere innere Stützstreben 61 aufweisen, welche sich radial nach innen bezüglich des Innenkonturelements 30 erstrecken und mit dem Innenkonturelement 30 verbunden sind. Die inneren Stützstreben 61 können beispielsweise an dem Innenkonturelement 30 durch Anlaminieren, Anschweißen, Ankleben oder mittels Schraub- oder Steckverbindungen angebracht sein. Beispielsweise können eine oder mehrere innere Stützstreben der Innenkontur-Stützstruktur als eine Einheit mit der inneren Mantelkonturwand 32 des Innenkonturelements 30 integriert, insbesondere einstückig, ausgebildet sein, um eine mit dem Faserverbundmaterial der fertigen faserverstärkten Filtertrommelelement integriert ausgebildete Innenstützstruktur (beispielsweise für den Anschluss an eine Trommelwelle) zu bilden.

Die Außenkontur-Stützstruktur 50 und/oder die Innenkontur-Stützstruktur 60 können jeweilig aus mindestens einem von einem Holzmaterial, einem Metallmaterial (beispielsweise Stahl oder Edelstahl) und einem Faserverbundmaterial (beispielsweise einem glasfaserverstärkten Kunststoff, einem karbonfaserverstärkten Kunststoff, einem stahlfaserverstärkten Kunststoff und dergleichen) ausgebildet sein.

Die Formeinrichtung 10 mit dem Außenkonturelement 20 und dem Innenkonturelement 30 kann mittels der Stützeinrichtung so abgestützt und/oder gehalten werden, dass das Außenkonturelement 20 und das Innenkonturelement 30 sich mit ihrer Längserstreckung entlang einer Vertikalrichtung erstrecken. Mit anderen Worten können das Außenkonturelement 20 und das Innenkonturelement 30 mittels der Stützeinrichtung in einer aufrechtstehenden Anordnung abgestützt und/oder gehalten werden. Bei einer solchen Anordnung der Formeinrichtung 10 kann der erste Endabschnitt 19a des Formhohlraums 18 ein oberer Endabschnitt des Formhohlraums 18 sein und kann der zweite Endabschnitt 19b des Formhohlraums 18 ein oberer Endabschnitt des Formhohlraums 18 sein. Eine derartige Anordnung hat den Vorteil, dass das Matrixmaterial M den Formhohlraum in der Vertikalrichtung (zum Beispiel von unten nach oben oder von oben nach unten entlang der Vertikalrichtung) füllen kann, wodurch sich eine gleichmäßige Füllung des Formhohlraums in der Umfangsrichtung erreichen lässt.

Die Abstützung und Stellung der Formeinrichtung 10 mit dem Außenkonturelement 20 und dem Innenkonturelement 30 ist jedoch nicht auf die oben beschriebene aufrechtstehende Anordnung beschränkt. So kann die Formeinrichtung 10 mit dem Außenkonturelement 20 und dem Innenkonturelement 30 auch mit ihrer Längserstreckung schräg oder geneigt zur Vertikalrichtung oder senkrecht zur Vertikalrichtung (d.h. z.B. in horizontaler Stellung) angeordnet sein. Die Formeinrichtung 10 mit dem Außenkonturelement 20 und dem Innenkonturelement 30 kann durch die Stützeinrichtung auch drehbar abgestützt sein, so dass das Außenkonturelement 20 und dem Innenkonturelement 30 gemeinsam in Rotation versetzt werden können (z.B. mittels einer nicht gezeigten Rotationsantriebseinheit).

Die Vorratseinrichtung 70 kann als ein Behälter oder Tank ausgebildet sein, in welchem das Matrixmaterial M bevorratet wird. Das Matrixmaterial M kann ein Einkomponenten-Material oder ein Mehrkomponenten-Material aufweisen. Die Vorratseinrichtung 70 kann beispielsweise einen Behälter oder Tank zur Bevorratung eines Einkomponenten-Materials oder zur Bevorratung eines bereits angemischten Mehrkomponenten-Materials aufweisen. Die Vorratseinrichtung 70 kann aber auch ein mehrere Behälter oder Tanks oder eine Mehrkammerstruktur aufweisen, um die mehreren Komponenten des Mehrkomponenten-Materials getrennt voneinander in den mehreren Behältern oder Tanks oder in unterschiedlichen Kammern der Mehrkammerstruktur aufzuweisen. Bei dieser Ausgestaltung kann das Vermischen der mehreren Komponenten des Mehrkomponenten-Materials außerhalb der Vorratseinrichtung 70 durchgeführt werden, beispielsweise durch eine Mischdüseneinrichtung in der Verbindungsleitung.

Die Druckdifferenzerzeugungseinrichtung 40 kann mit der Formeinrichtung 10 fluidverbindbar sein. Beispielsweise kann die Druckdifferenzerzeugungseinrichtung 40 über eine Rohr- und/oder Schlauchleitung mit der Formeinrichtung 10 fluidverbunden werden. Die Druckdifferenzerzeugungseinrichtung 40 kann dazu eingerichtet sein, eine Druckdifferenz zwischen dem ersten Endabschnitt 19a und dem zweiten Endabschnitt 19b des Formhohlraums 18 zu erzeugen. Unter Ausnutzung der so erzeugten Druckdifferenz kann das Matrixmaterial in den Formhohlraum 18 eingebracht werden, um den Formhohlraum 18 mit Matrixmaterial zu füllen.

Wie in diversen Figuren (siehe exemplarisch Figur 1) gezeigt, kann die Druckdifferenzerzeugungseinrichtung 40 eine Vakuumpumpe 41 aufweisen. Die Vakuumpumpe 41 kann über eine erste Verbindungsleitung (z.B. eine Rohr- und/oder Schlauchleitung) 46 mit der Formeinrichtung 10 verbunden sein. Beispielsweise kann die erste Verbindungsleitung 46 den ersten Endabschnitt 19a des Formhohlraums 18 mit einem Ansauganschluss der Vakuumpumpe 41 verbinden. Der zweiten Endabschnitt 19b des Formhohlraums 18 kann mit der Vorratseinrichtung 70 über eine zweite Verbindungsleitung (z.B. eine Rohr- und/oder Schlauchleitung) 47 verbunden sein. Im Betrieb wird durch die Vakuumpumpe 41 ein Unterdruck erzeugt, welcher über die erste Verbindungsleitung 46 an den ersten Endabschnitt 19a des Formhohlraums 18 angelegt wird. Durch den an den ersten Endabschnitt 19a des Formhohlraums 18 angelegten Unterdruck kann das Matrixmaterial M über die zweite Verbindungsleitung 47 aus der Vorratseinrichtung 70 in den Formhohlraum 18 gesaugt werden.

Bei einer Anordnung des Außenkonturelements und des Innenkonturelements mit ihrer Längserstreckung entlang einer Vertikalrichtung (d.h. einer aufrechtstehenden Anordnung des Außenkonturelements und des Innenkonturelements) kann der erste Endabschnitt 19a ein oberer Endabschnitt des Formhohlraums 18 in der Vertikalrichtung sein und kann der zweite Endabschnitt 19b ein unterer Endabschnitt des Formhohlraums 18 in der Vertikalrichtung sein. Bei dieser Anordnung kann das Matrixmaterial M anhand des Unterdrucks, welcher durch die mit dem ersten (oberen) Endabschnitt 19a verbundenen Vakuumpumpe 41 erzeugt wird, aus der mit dem zweiten (unteren) Endabschnitt 19b verbundenen Vorratseinrichtung 70 angesaugt werden und von unten nach oben entlang der Vertikalrichtung den Formhohlraum 18 füllen.

In einer weiteren Ausführungsform kann die Druckdifferenzerzeugungseinrichtung 40 eine das Matrixmaterial mit Druck beaufschlagende Druckbeaufschlagungseinrichtung aufweisen. Die Druckbeaufschlagungseinrichtung kann beispielsweise eine das Matrixmaterial M mit Druck beaufschlagende Pumpe 42 und/oder einen druckbeaufschlagten Vorlagebehälter aufweisen, ist jedoch nicht darauf beschränkt.

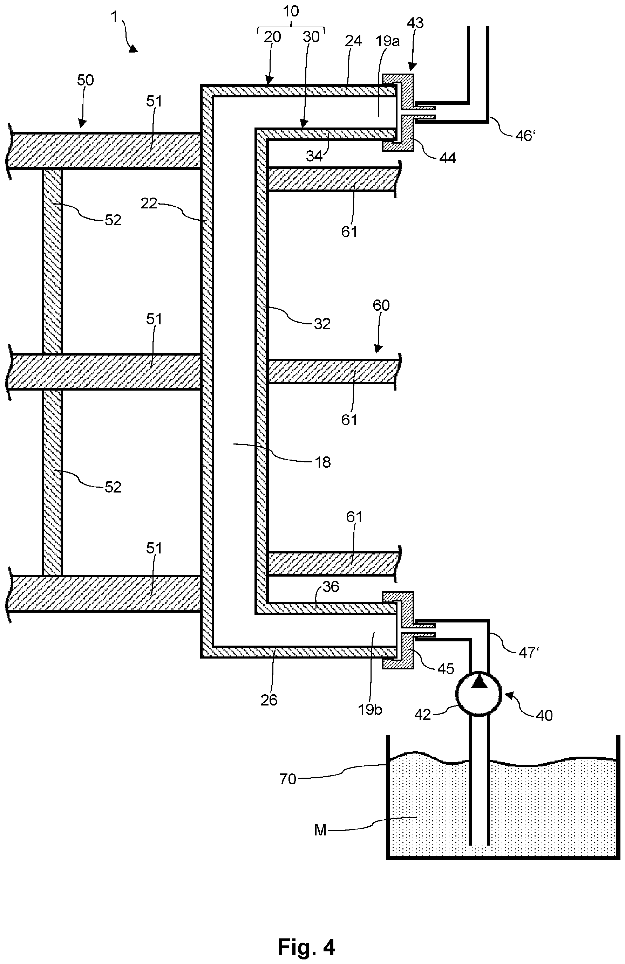

In der in Figur 4 gezeigten Ausführungsform weist die Druckdifferenzerzeugungseinrichtung 40 beispielhaft die das Matrixmaterial M mit Druck beaufschlagende Pumpe 42 aufweisen. Die Pumpe 42 kann eine beliebige Pumpenart sein, sofern sie in der Lage ist, das Matrixmaterial zu fördern und mit Druck zu beaufschlagen. Die Pumpe 42 kann in bzw. entlang der zweite Verbindungsleitung 47' angeordnet sein. Die Pumpe 42 kann über die zweite Verbindungsleitung 47` mit sowohl der Formeinrichtung 10 als auch der Vorratseinrichtung 70 verbunden sein. Beispielsweise kann die zweite Verbindungsleitung 47 den zweiten Endabschnitt 19b des Formhohlraums 18 mit einem Druckanschluss der Pumpe 42 und die Vorratseinrichtung 70 mit einem Sauganschluss der Pumpe 42 verbinden. Der erste Endabschnitt 19a des Formhohlraums 18 kann über die erste Verbindungsleitung 46' ausmünden, beispielsweise frei in einen Behälter oder Tank ausmünden. Es ist jedoch auch möglich, dass der Druckanschluss der Pumpe 42 alternativ mit dem ersten Endabschnitt 19a verbunden ist. Im Betrieb wird durch die Pumpe 42 das Matrixmaterial M aus der Vorratseinrichtung 43 angesaugt und mit Druck in den Formhohlraum 18 injiziert, um mittels dem von der Pumpe 42 aufgebrachten Druck das Matrixmaterial M in den Formhohlraum 18 zu füllen.

Bei einer Anordnung des Außenkonturelements und des Innenkonturelements mit ihrer Längserstreckung entlang einer Vertikalrichtung (d.h. einer aufrechtstehenden Anordnung des Außenkonturelements und des Innenkonturelements) kann der erste Endabschnitt 19a ein oberer Endabschnitt des Formhohlraums 18 in der Vertikalrichtung sein und kann der zweite Endabschnitt 19b ein unterer Endabschnitt des Formhohlraums 18 in der Vertikalrichtung sein. Bei dieser Anordnung kann das Matrixmaterial M anhand des durch die Pumpe 42 auf das Matrixmaterial M aufgebrachten Drucks in den zweiten (unteren) Endabschnitt 19b injiziert werden und der Formhohlraum 18 von unten nach oben entlang der Vertikalrichtung gefüllt werden.

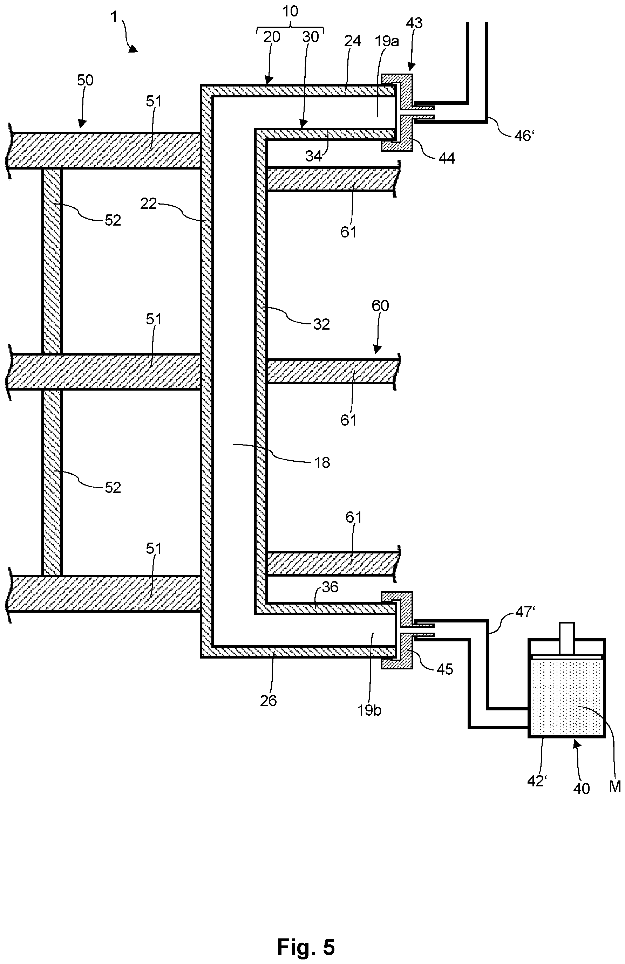

In der in Figur 5 gezeigten Ausführungsform weist die Druckdifferenzerzeugungseinrichtung 40 beispielhaft den druckbeaufschlagten Vorlagebehälter 42' aufweisen, welcher mit Matrixmaterial gefüllt ist und dazu eingerichtet ist, mittels Druck (z.B. mittels pneumatischen Druck (bspw. Gasdruck) oder mit einem Druckstempel (siehe Figur 5) mit Druck) beaufschlagt zu werden. Beispielsweise kann der Vorlagebehälter 42` einen Druckanschluss aufweisen, welcher mit einem von dem ersten und dem zweiten Endabschnitt 19a, 19b des Formhohlraums 18 verbunden ist. Durch Beaufschlagen des Vorlagebehälters 42' mit Druck kann das Matrixmaterial aus dem Vorlagebehälter 42` den Formhohlraum 18, um mit Druck das Matrixmaterial in den Formhohlraum zu füllen. Die Verwendung des Vorlagebehälters 42' kann auf analoge Weise wie die Verwendung der Pumpe 42 geschehen, weshalb auf die dazu bereits erfolgte Beschreibung und Figur 4 verwiesen wird.

In einer weiteren Ausführungsform der vorliegenden Erfindung kann das Befüllen des Formhohlraums 18 mittels (z.B. ausschließlich mittels) Schwerkraftwirkung erfolgen. Mit anderen Worten kann der Formhohlraum 18 unter Ausnutzung der auf das Matrixmaterial wirkenden Schwerkraft mit dem Matrixmaterial gefüllt werden, indem das Matrixmaterial freifließend in den Formhohlraum 18 einströmt. Eine solche Befüllung des Formhohlraums 18 ist insbesondere bei der bereits beschriebenen Anordnung des Außenkonturelements 20 und des Innenkonturelements 30 mit ihrer Längserstreckung entlang einer Vertikalrichtung (d.h. einer aufrechtstehenden Anordnung des Außenkonturelements und des Innenkonturelements) anwendbar und kann Gerätschaften und Energie einsparen. Die Befüllung mittels Schwerkraftwirkung ist auch insbesondere bei der Herstellung eines Filtertrommelelements für Filterzentrifugenvorrichtungen (insbesondere für Schubzentrifugen) mit nur einer Stirnwand einseitig an einem Ende des Mantels (z.B. einer Anordnung ohne die Stirnwand-Konturwand 24 und die innere Stirnwand-Konturwand 34) vorteilhaft, da hier das Matrixmaterial beispielsweise über die offene Stirnfläche zwischen der äußeren Mantelkonturwand 22 und der inneren Mantelkonturwand 32 (z.B. bei einer aufrechtstehenden Anordnung von oben her) eingefüllt werden kann.

In noch weiteren Ausführungsformen der vorliegenden Erfindung sind auch Kombinationen der oben erläuterten Techniken vorgesehen. Beispielsweise können die Ausführungsformen der Figuren 1 und 4 oder der Figuren 1 und 5 kombiniert werden. So kann beispielsweise sowohl eine Vakuumpumpe 41, welche deren Sauganschluss an den ersten Verbindungsabschnitt 19a des Formhohlraum 18 angeschlossen ist, als auch eine Pumpe 42 oder ein Vorlagebehälter 42`, deren/dessen Druckanschluss an den zweiten Verbindungsabschnitt 19b des Formhohlraum 18 angeschlossen ist, vorgesehen sein. Hierdurch kann in vorteilhafter Weise das Matrixmaterial sowohl durch den von der Vakuumpumpe 41 erzeugten Unterdruck als auch durch den von der Pumpe 42 oder dem Vorlagebehälter 42` erzeugten Druck in den Formhohlraum 18 der Formeinrichtung eingebracht werden.

Zur Abdichtung von offenen Endabschnitte 19a, 19b des Formhohlraums 18 und/oder zum Anschluss der Verbindungsleitungen kann die Vorrichtung 1 ferner eine Abdichtungseinrichtung 43 aufweisen. Die Abdichtungseinrichtung 43 kann dazu eingerichtet sein, die offenen Endabschnitte 19a, 19 (z.B. radial und/oder in Umfangsrichtung) abzudichten, beispielsweise vakuum- und/oder druckdicht zu verschließen. Zusätzlich kann die Abdichtungseinrichtung 43 dazu eingerichtet sein, die Verbindungsleitungen an die Formeinrichtung 10 der Vorrichtung 1 anzuschließen.

Ein Beispiel einer Abdichtungseinrichtung 43 der Vorrichtung 1 der vorliegenden Erfindung ist beispielsweise in Figuren 1, 4 und 5 gezeigt. Die Abdichtungseinrichtung 43 nach Figuren 1, 4 und 5 kann beispielsweise mindestens ein Abdeckelement aufweisen, welches lösbar an dem Außenkonturelement 20 und dem Innenkonturelement 30 anbringbar ist. In dem dargestellten Beispiel sind zwei separate Abdeckelemente 44 und 45 gezeigt. Es kann jedoch auch vorgesehen sein, dass nur ein einzelnes großflächiges Abdeckelement vorgesehen ist oder dass die Abdeckelemente 44 und 45 über Stabilisierungselemente (z.B. Streben oder dergleichen) miteinander verbunden sind, so dass diese ein einzelnes Abdeckelement bilden. Die Abdeckelemente 44 und 45 der Abdichtungseinrichtung 43 können in zu der Gestalt der Formeinrichtung 10 passender Weise ausgebildet sein. Wie beispielsweise in Figur 2 gezeigt, können die Abdeckelemente 44 und 45 bei einer halbtrommelförmigen Formeinrichtung 10 eine halbringförmige (d.h. z.B. halbhohlzylindrisch) Gestalt aufweisen und sich zum Beispiel entlang ihrer Längserstreckung halbringförmig erstrecken. Die Abdeckelemente 44 und 45 können jeweils zum Beispiel einen halbringförmigen Grundkörper aufweisen, bei welchem sich von der der Formeinrichtung 10 abgewandten Seite eine Anschlusseinrichtung (z.B. ein Rohr- und/oder Schlauchanschluss, beispielsweise ein Anschlussstutzen) aus erstreckt und bei welchem sich auf der der Formeinrichtung 10 zugewandten Seite beidseits der Formeinrichtung 10 zwei Kragenabschnitte erstrecken, welche das Außenkonturelement 20 und das Innenkonturelement 30 umgeben und daran in abdichtender Weise anliegen (siehe zum Beispiel die Querschnittansicht in Figur 1). Die Kragenabschnitte können beispielsweise mithilfe von Klemmen (nicht gezeigt) gegen das Außenkonturelement 20 und das Innenkonturelement 30 gepresst werden, um eine vakuum- und/oder druckdichte Verbindung zwischen dem jeweilige Abdeckelement 44, 45 und dem Außenkonturelement 20 und dem Innenkonturelement 30 herzustellen. In einer weiteren Ausgestaltung können die Abdeckelemente 44 und 45 derart ausgebildet sein, dass diese bei einer halbtrommelförmigen Formeinrichtung die Mündungsflächen des Formhohlraums 18 sowohl in Umfangsrichtung als auch in Radialrichtung der Formeinrichtung 10 abdecken und verschließen können. Es versteht sich, dass bei einer volltrommelförmigen Formeinrichtung 10 (siehe Figur 3) die Abdeckelemente 44 und 45 nicht halbringförmig, sondern als geschlossene Ringe ausgeführt sind.

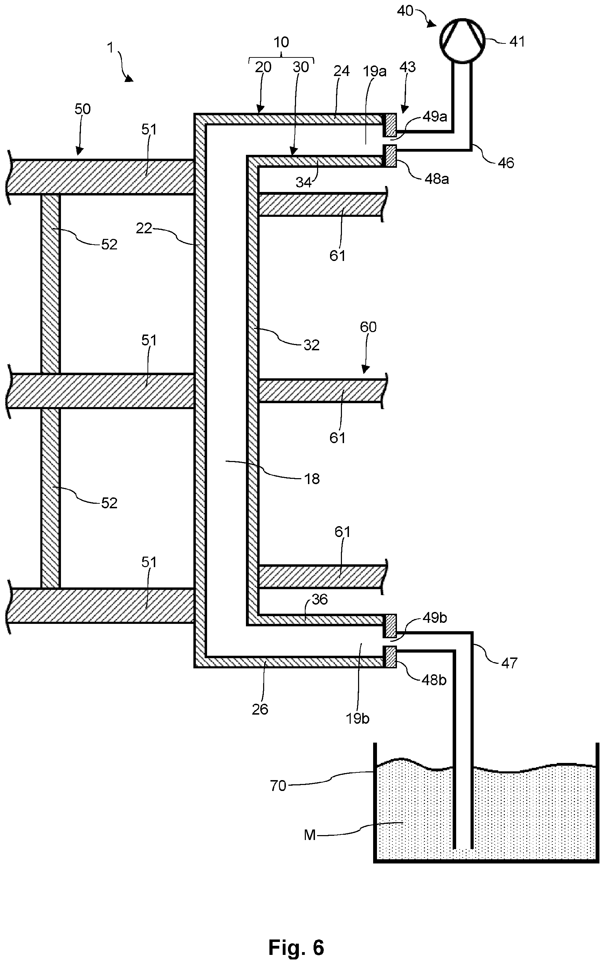

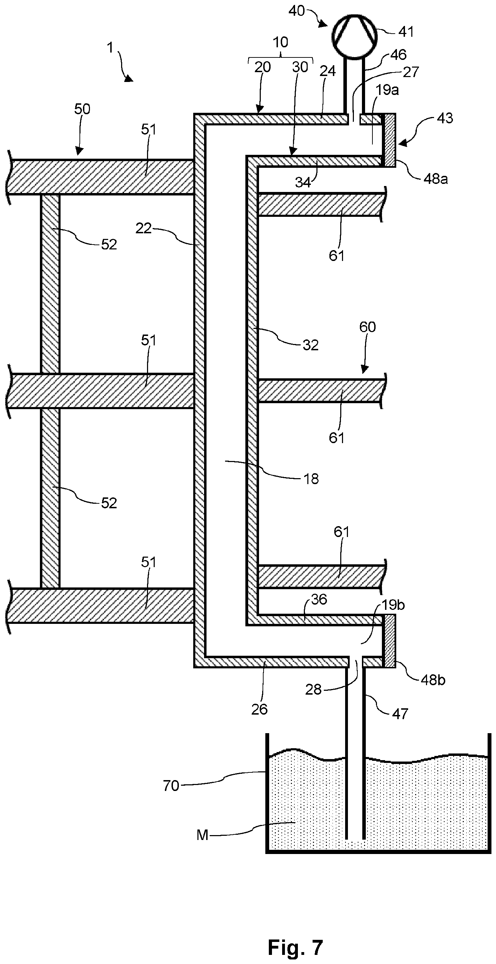

Ein weiteres Beispiel einer Abdichtungseinrichtung 43 der Vorrichtung 1 der vorliegenden Erfindung ist beispielsweise in Figuren 6 und 7 gezeigt. Die Abdichtungseinrichtung 43 von Figuren 6 und 7 weist ein oder mehrere Endabschnittverbindungselemente 48a, 48b auf. Das eine oder die mehreren Endabschnittverbindungselemente 48a, 48b können das Außenkonturelement 20 und das Innenkonturelement 30 an dem ersten und dem Endabschnitt des Formhohlraums 18 verbinden, um den Formhohlraum 18 an dem ersten und den zweiten Endabschnitt 19a, 19b des Formhohlraums 18 abzudichten und einen geschlossenen Formhohlraum 18 zwischen dem Außenkonturelement 20 und dem Innenkonturelement 30 zu bilden. Das eine oder die mehreren Endabschnittverbindungselemente 48a, 48b können aus dem gleichen oder einem anderen Material wie das Außenkonturelement 20 und/oder das Innenkonturelement 30 ausgebildet sein. Das eine oder die mehreren Endabschnittverbindungselemente 48a, 48b können beispielsweise dazu vorgesehen sein, einen Bestandteil des fertigen faserverstärkten Filtertrommelelement zu bilden, beispielsweise eine Lagerschale oder Lageraufnahme für die Lagerung der Filtertrommelwelle.

Bei einer halbtrommelförmigen Formeinrichtung 10 (siehe Figur 2) können beispielsweise die Endabschnittverbindungselemente 48a, 48b zusammen mit den Abschlusselementen 38a, 38b den Formhohlraum 18 sowohl in Umfangsrichtung als auch in Radialrichtung abdichten. Es ist jedoch auch möglich, dass die Endabschnittverbindungselemente 48a, 48b zusammen mit den Abschlusselementen 38a, 38b zu einem einzelnen Element (z.B. in Form eines großflächigen Deckels, welcher die komplette offene Seite der Halbtrommel abdeckt) kombiniert sind, so dass das resultierende einzelne Element den Formhohlraum 18 sowohl in Umfangsrichtung als auch in Radialrichtung abdichten kann. Bei einer volltrommelförmigen Formeinrichtung 10 (siehe Figur 2) können zwei Endabschnittverbindungselemente 48a, 48b für die jeweiligen Endabschnitte 19a, 19b vorgesehen sein, um den Formhohlraum 18 an dem ersten und den zweiten Endabschnitt 19a, 19b des Formhohlraums 18 abzudichten und einen geschlossenen Formhohlraum 18 zwischen dem Außenkonturelement 20 und dem Innenkonturelement 30 zu bilden. Die Endabschnittverbindungselemente 48a, 48b können hierzu beispielsweise als Halb-Hohlzylinder (z.B. zum radialen Abdichten einer halbtrommelförmigen Formeinrichtung 10), als geschlossener Hohlzylinder (z.B. zum radialen Abdichten einer volltrommelförmigen Formeinrichtung 10) oder als beliebige andere Gestalt zum Abdichten des Formhohlraum 18 zwischen dem Außenkonturelement 20 und dem Innenkonturelement 30 ausgebildet sein.

Zum Anschluss von Verbindungsleitungen an die Formeinrichtung 10 der Vorrichtung 1 können bei diesem Beispiel der Abdichtungseinrichtung 43 Durchgangsöffnungen in das Außenkonturelement 20, das Innenkonturelement 30 und/oder das eine oder die mehreren Endabschnittverbindungselemente 48a, 48b eingebracht werden. Beispielsweise zeigt Figur 6 eine Ausgestaltung, bei welcher Durchgangsöffnungen 49a, 49b, an welche die Verbindungsleitungen anschließbar sind, in den Endabschnittverbindungselementen 48a, 48b vorgesehen sind. Figur 7 zeigt eine weitere Ausgestaltung, bei welcher Durchgangsöffnungen 27, 28, an welche die Verbindungsleitungen anschließbar sind, in dem Außenkonturelement 20 an dem ersten und den zweiten Endabschnitt 19a, 19b des Formhohlraums 18 (z.B. in dem Bereich des ersten und des zweiten Endabschnitts 19a, 19b des Formhohlraums bzw. mit unmittelbarer Verbindung mit dem ersten und dem zweiten Endabschnitt 19a, 19b des Formhohlraums) vorgesehen sind. Die Durchgangsöffnungen können vorab in das jeweilige Element oder die jeweiligen Elemente eingebracht sein, können aber auch nachträglich (d.h. z.B. nach Zusammensetzen und Verbinden der einzelnen Elemente der Formeinrichtung 10) in das jeweilige Element oder die jeweiligen Elemente eingebracht werden (z.B. mittels Bohren). Die Verbindungsleitungen können dann an die Durchgangsöffnungen angeschlossen werden und das Matrixmaterial über die Durchgangsöffnungen in den Formhohlraum 18 eingebracht wird.

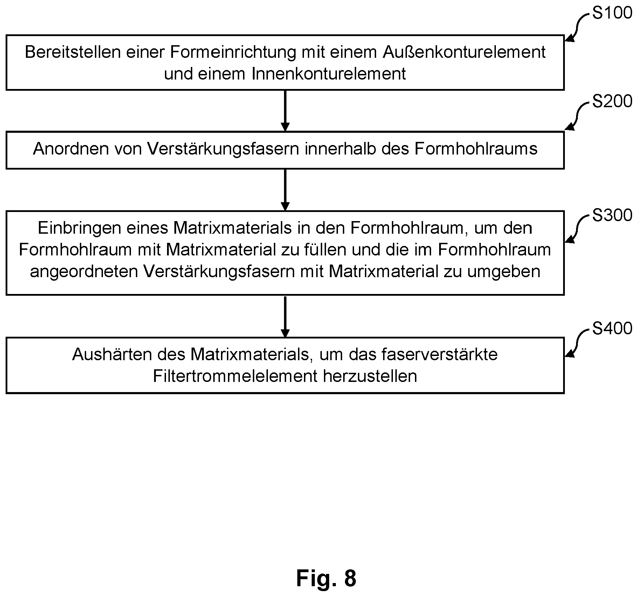

Bezugnehmend auf Figuren 8 bis 11(b) stellt die vorliegende Erfindung ferner ein Herstellungsverfahren eines faserverstärkten Filtertrommelelements für eine Filtervorrichtung bereit. Das Herstellungsverfahren der vorliegenden Erfindung kann beispielsweise mittels einer Vorrichtung 1 der vorliegenden Erfindung ausgeführt werden, ist jedoch nicht darauf beschränkt.

Das Herstellungsverfahren der vorliegenden Erfindung weist zunächst einen Schritt S100 des Bereitstellens einer Formeinrichtung 10 mit einem Außenkonturelement 20 und einem Innenkonturelement 30 auf. Die Formeinrichtung 10 mit dem Außenkonturelement 20 und dem Innenkonturelement 30 kann wie vorstehend beschrieben ausgebildet sein. Das heißt, dass das Innenkonturelement 20 und das Außenkonturelement 30 derart zueinander komplementär ausgebildet sind und angeordnet werden, dass das Innenkonturelement 30 und das Außenkonturelement 20 den Formhohlraum 18 in Gestalt des herzustellenden faserverstärkten Filtertrommelelements zwischen dem Außenkonturelement 20 und dem Innenkonturelement 30 definieren. Das Außenkonturelement 20 und das Innenkonturelement 30 können beispielsweise mit ihrer Längserstreckung entlang der Vertikalrichtung in der hierin beschriebenen aufrechtstehenden Anordnung angeordnet werden.

Das Herstellungsverfahren der vorliegenden Erfindung kann (z.B. als Teil des Schritts S100 des Bereitstellens einer Formeinrichtung 10) ferner das Anordnen einer Außenkontur-Stützstruktur 50 zur Abstützung und Fixierung des Außenkonturelements 20 aufweisen. Das Herstellungsverfahren kann zusätzlich oder alternativ das Anordnen einer Innenkontur-Stützstruktur 60 zur Abstützung und Fixierung des Innenkonturelements 30 aufweisen. Die Innenkontur-Stützstruktur 60 kann mit dem Innenkonturelement 30 verbunden oder damit als eine Einheit integriert, insbesondere einstückig, ausgebildet werden. Die Außenkontur-Stützstruktur 50 und die Innenkontur-Stützstruktur 60 können wie vorstehend beschrieben ausgebildet und eingerichtet sein.

Das Herstellungsverfahren der vorliegenden Erfindung weist weiter einen Schritt S200 des Anordnens von Verstärkungsfasern V innerhalb des Formhohlraums 18 auf. Die Verstärkungsfasern V können beispielsweise Glasfasern, Karbonfaser, Aramidfasern (z.B. Kevlar-Fasern), Stahlfasern oder eine Mischung daraus aufweisen. Die Verstärkungsfasern V können als lose Fasern oder Fasermatten oder dergleichen vorliegen. Bei der Verwendung von Verstärkungsfasern V in Form von Fasermatten können die Verstärkungsfasern V in einer oder mehreren Lagen im Abstand voneinander unter Verwendung von Abstandshaltern 80 zur Distanzhaltung zwischen den mehreren Lagen aus Fasermatten angeordnet werden. Das Anordnen der Fasermatten kann beispielsweise so erfolgen, dass später in das fertige faserverstärkten Filtertrommelelement einzubringende Öffnungen bereits im Vorfeld berücksichtigt werden, so dass bei einem späteren Einbringen der Öffnungen in das fertigen faserverstärkten Filtertrommelelement die Gitter- und Faserstruktur der eingebetteten Fasermatten nicht unterbrochen oder zerstört wird.

Die Verwendung von Verstärkungsfasern V in Form von Fasermatten hat zudem die Vorteile, dass die Faser präziser hinsichtlich Faserausrichtung, Lagenanzahl und Lagenanordnung (insbesondere Abstand) angeordnet werden können, was die Fertigungsqualität verbessert. Ferner hat die Verwendung von Verstärkungsfasern V in Form von Fasermatten hat die weiteren Vorteile, dass die zur Erreichung der durch die geplante Anwendung erforderlichen Bauteilfestigkeit notwendige Geometrie, Anordnung und Beschaffenheit der Fasermatten (z.B. Maschenweite, Materialdicke und so weiter) präziser abgestimmt werden kann, was eine auf die erforderliche Bauteilfestigkeit abgestimmte Fertigung des Faserverbundmaterials erlaubt. Zum Beispiel kann die für die geforderte Bauteilfestigkeit notwendige Geometrie, Anordnung und Beschaffenheit der Fasermatten anhand von Computersimulationen (z.B. FEM-Berechnungen) vorab berechnet und für eine effiziente Fertigung des Faserverbundmaterials optimiert werden. Im Vergleich dazu hat sich gezeigt, dass beim manuellen Laminierprozess häufig dicker laminiert werden muss, um die nötigen Festigkeitsanforderungen zu erreichen, und dass es schwierig sein kann, die vorab optimierte Geometrie, Anordnung und Beschaffenheit von Verstärkungsfasern im fertigen Bauteil mittels des manuellen Laminierprozesses umzusetzen.

Der Schritt S100 des Bereitstellens der Formeinrichtung und der Schritt S200 des Anordnens von Verstärkungsfasern können ferner zumindest teilweise überlappen oder miteinander verzahnt sein. So können der Schritt S100 des Bereitstellens der Formeinrichtung und der Schritt S200 des Anordnen von Verstärkungsfasern aufweisen zunächst das Anordnen des Innenkonturelements 30, dann das Anordnen von Verstärkungsfasern V entlang des Innenkonturelements 30, dann das Anordnen des Außenkonturelements 20 komplementär zum Innenkonturelement 30, um den Formhohlraum 18 mit den darin angeordneten Verstärkungsfasern V zu bilden. Das Anordnen der Verstärkungsfasern V entlang des Innenkonturelements 30 kann beispielsweise ein temporäres Anbringen (z.B. durch Befestigungselemente, Klebstoff oder dergleichen) der Verstärkungsfasern V an dem Innenkonturelement 30 aufweisen.

Das Herstellungsverfahren der vorliegenden Erfindung kann (z.B. als Teil des Schritts S100 des Bereitstellens einer Formeinrichtung 10 und/oder des Schritts S200 des Anordnen von Verstärkungsfasern) ferner das Anordnen von rohrförmigen Elementen 90 innerhalb des Formhohlraums 18 aufweisen, um Durchgangsöffnungen in dem fertigen faserverstärkten Filtertrommelelement vorzusehen. Beispielsweise können Rohrstutzen oder Tüllen zwischen die bereits angeordneten Verstärkungsfasern V eingelegt werden. Die rohrförmigen Elementen 90 können beispielsweise aus einem Kunststoffmaterial oder einem Metallmaterial (wie hierin für die Elemente der Formeinrichtung 10 beschrieben) ausgebildet sein und dazu vorgesehen sein, einen Bestandteil des fertigen faserverstärkten Filtertrommelelement zu bilden. Hierdurch kann im späteren Betrieb bei Verschleiß der rohrförmigen Elementen 90 ein einfacher Austausch der rohrförmigen Elemente 90 erfolgen, wobei die faserverstärkte Struktur des Filtertrommelelements nur minimal beeinträchtigt wird. Alternativ können die rohrförmigen Elementen 90 auch aus Einwegopfermaterial ausgebildet sein. Durch Anordnen der rohrförmigen Elementen 90 innerhalb des Formhohlraums 18 noch vor dem Befüllen mit Matrixmaterial können definierte Öffnungen (z.B. Filtrationsöffnungen und dergleichen) in dem fertigen faserverstärkten Filtertrommelelement bereits im Fertigungsprozess vorgesehen werden. Diese Öffnungen müssen dann beispielsweise nicht mehr nachträglich in das fertige faserverstärkte Filtertrommelelement eingebracht werden, wodurch die Gefahr der Zerstörung der Gitter- und Faserstruktur der eingebetteten Verstärkungsfasern (insbesondere bei Fasermatten) bei einem nachträglichen Anbringen von Filtrationsbohrungen minimiert oder beseitigt werden kann.

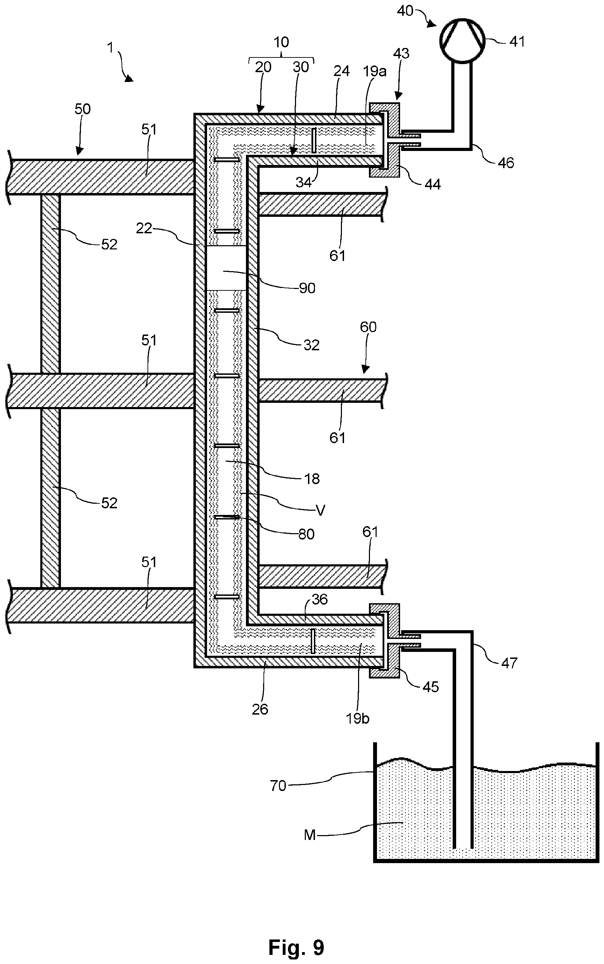

Nach dem Schritts S100 des Bereitstellens der Formeinrichtung 10 und dem Schritts S200 des Anordnens von Verstärkungsfasern V kann der Formhohlraum in einem Abdichtungsschritt abgedichtet werden. Beispielsweise kann der Formhohlraum 18 druck- und/der unterdruckdicht verschlossen werden. Hierzu kann die Abdichtungseinrichtung 43 der vorliegenden Erfindung verwendet werden. Wie in Figur 9 gezeigt und oben unter Bezugnahme auf Figur 1 bereits beschrieben, kann mindestens ein Abdeckelement (z.B. die Abdeckelemente 44 und 45) an dem Außenkonturelement 20 und dem Innenkonturelement 30 lösbar angebracht werden, um den Formhohlraum an dem ersten und den zweiten Endabschnitt 19a, 19b des Formhohlraums 18 abzudichten. In einem weiteren Beispiel können unter Bezugnahme auf Figuren 6 und 7 das Außenkonturelement 20 und das Innenkonturelement 30 an dem ersten und dem zweiten Endabschnitt 19a, 19b des Formhohlraum 18 miteinander mittels eines oder mehreren Endabschnittverbindungselementen (wie zum Beispiel den zuvor beschriebenen Endabschnittverbindungselementen 48a, 48b) verbunden werden, um den Formhohlraum 18 an dem ersten und den zweiten Endabschnitt 19a, 19b des Formhohlraums 18 abzudichten und einen geschlossenen Formhohlraum 18 zwischen dem Außenkonturelement 20 und dem Innenkonturelement 30 zu bilden.

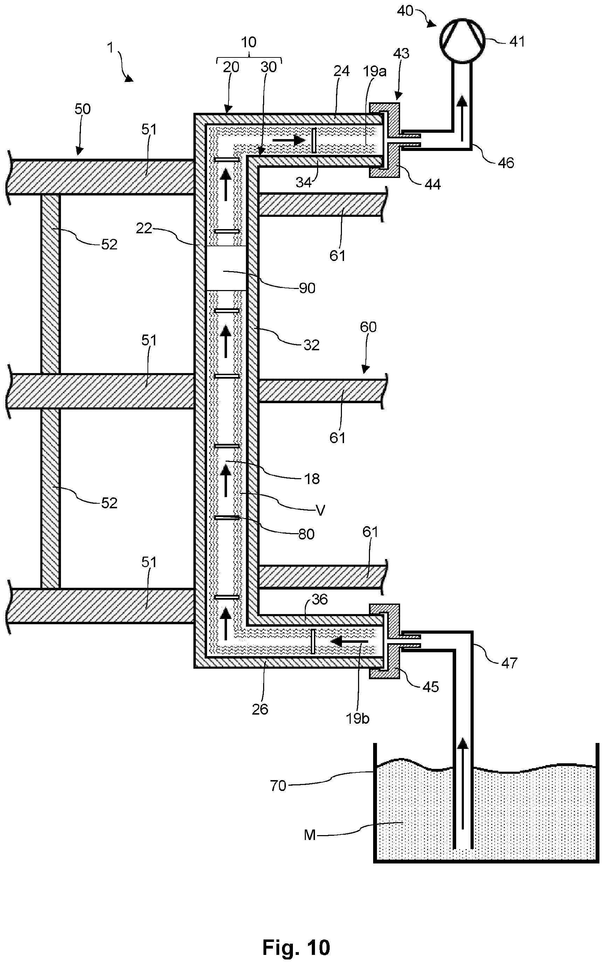

Bezugnehmend auf Figur 10 weist das Herstellungsverfahren der vorliegenden Erfindung weiter einen Schritt S300 des Einbringens eines Matrixmaterials M in den Formhohlraum 18 auf (siehe Pfeile, welche die Fließrichtung des Matrixmaterials angeben, in Figur 10). Das Matrixmaterial M kann ein Kunststoffmaterial sein, welches vor einem Aushärtungsvorgang viskose Eigenschaften hat, um es in den Formhohlraum 18 einbringen zu können. Das Matrixmaterial M kann beispielsweise ein Einkomponenten-Harzmaterial oder Mehrkomponenten-Harzmaterial sein. Zum Beispiel kann das Matrixmaterial M ein Reaktionsharz (beispielsweise Epoxidharz) sein, welches vor dem Einbringen in den Formhohlraum 18 oder während des Einbringens in den Formhohlraum 18 mit einem Härter vermischt wird (beispielsweise bereits in der Vorratseinrichtung 70 oder dem Vorlagebehälter 42` oder mittels einer Mischdüseneinrichtung in einer der Verbindungsleitungen). Das Matrixmaterial M ist jedoch nicht auf Reaktionsharz beschränkt und es kann jedes geeignete Kunststoffmaterial zur Herstellung von Faserverbundwerkstoffen verwendet werden.

Das Einbringen des Matrixmaterials M in den Formhohlraum 18 kann gemäß einer hierin beschriebenen Art und Weise durchgeführt werden, um den Formhohlraum 18 mit Matrixmaterial M zu füllen und die im Formhohlraum 18 angeordneten Verstärkungsfasern V mit Matrixmaterial M zu umgeben. Beispielsweise kann das Einbringen des Matrixmaterials M in den Formhohlraum 18 mittels Schwerkraftwirkung auf das Matrixmaterial M und/oder mittels einer durch die Druckdifferenzerzeugungseinrichtung 40 erzeugten Druckdifferenz zwischen dem ersten Endabschnitt 19a und dem zweiten Endabschnitt 19b des Formhohlraums 18 durchgeführt werden.

Das Einbringen des Matrixmaterials M in den Formhohlraum 18 mittels der Druckdifferenz zwischen dem ersten Endabschnitt 19a und dem zweiten Endabschnitt 19b des Formhohlraums 18 kann beispielsweise das Befüllen des Formhohlraums 18 mit Matrixmaterial M durch Ansaugen des Matrixmaterial in den Formhohlraum 18 mittels eines an den Formhohlraum 18 angelegten Unterdrucks. Durch Vakuumfüllen des Matrixmaterials M in den Formhohlraum 18 können möglicherweise vorhandene Gaseinschlüsse so vergrößert, dass die daraus entstehenden Blasen aus der noch flüssigen Matrix gefördert werden (z.B. sich in der hierin beschriebenen aufrecht stehenden Anordnung nach oben bewegen). Ferner können Hohlräume besser ausgefüllt werden (beispielsweise durch langsames Füllen der Hohlräume statisch von unten nach oben). Auf diese Weise kann in vorteilhafter Weise ein nach dem Füllvorgang entspanntes Matrixmaterial mit sehr wenigen Gaseinschlüssen oder zumindest im Wesentlichen ohne Gaseinschlüsse gebildet werden. Hierdurch kann können Fehlstellen (z.B. Gaseinschlüsse) im ausgehärteten Matrixmaterial vermieden werden, was in einer hohen Festigkeit und hohen Korrosionsbeständigkeit resultiert.

Zusätzlich oder alternativ kann das Einbringen des Matrixmaterials M in den Formhohlraum 18 das Befüllen des Formhohlraums 18 mit Matrixmaterial M durch Injizieren des Matrixmaterials M mit Druck in den Formhohlraum 18 aufweisen.

Wie unter Bezugnahme auf Figur 1 bereits beschrieben, kann in einem Beispiel die Druckdifferenzerzeugungseinrichtung 40 beispielsweise eine Vakuumpumpe 41 aufweisen und kann das Herstellungsverfahren das Verbinden des ersten Endabschnitts 19a des Formhohlraums 18 mit einem Ansauganschluss der Vakuumpumpe 41, das Verbinden des zweiten Endabschnitts 19a des Formhohlraums 18 mit einer Vorratseinrichtung 70, in welcher das Matrixmaterial M bevorratet ist, und das Erzeugen von Unterdruck mittels der Vakuumpumpe 41 und das Ansaugen des Matrixmaterials M aus der Vorratseinrichtung 70 mittels des erzeugten Unterdrucks in den Formhohlraum 18 aufweisen.

Wie unter Bezugnahme auf Figuren 4 und 5 bereits beschrieben, kann in einem weiteren Beispiel die Druckdifferenzerzeugungseinrichtung 40 eine Druckbeaufschlagungseinrichtung, beispielsweise eine Pumpe 42 und/oder einen Vorlagebehälter 42` aufweisen. Das Herstellungsverfahren kann beispielsweise das Verbinden von einem von dem ersten und dem zweiten Endabschnitt 19a, 19b des Formhohlraums 18 mit einem Druckanschluss der Druckbeaufschlagungseinrichtung, und das Injizieren von Matrixmaterial M mittels der Druckbeaufschlagungseinrichtung in den Formhohlraum 18, um mit Druck das Matrixmaterial M in den Formhohlraum 18 zu füllen, aufweisen.

Auch Kombinationen dieser Techniken sind vorgesehen. Beispielsweise können die Ausführungsformen der Figuren 1 und 4 oder der Figuren 1 und 5 kombiniert werden, um so eine auf einer Seite Unterdruck und auf der anderen Seite Druck an den Formhohlraum 18 anzulegen, um das Matrixmaterials M in den Formhohlraum 18 einzubringen.

Der Schritt S300 des Einbringens des Matrixmaterials M in den Formhohlraum 18 kann ferner beispielsweise über das mindestens eine Abdeckelement (z.B. die Abdeckelemente 44 und 45) erfolgen, zum Beispiel mittels einer oder mehrerer an das mindestens eine Abdeckelement angeschlossenen Verbindungsleitungen 46, 47. In einem Fall, bei welchem eines oder mehreren Endabschnittverbindungselementen (wie zum Beispiel Endabschnittverbindungselemente 48a, 48b) zum Verbinden des Außenkonturelements 20 und des Innenkonturelements 30 zum Ausbilden eines geschlossenen Formhohlraums 18 verwendet werden, kann der Schritt S300 des Einbringens des Matrixmaterials M in den Formhohlraum 18 ferner beispielsweise das Einbringen von Durchgangsöffnungen in das Außenkonturelement 20, das Innenkonturelement 30 und/oder das eine oder die mehreren Endabschnittverbindungselemente und anschließend das Einbringen des Matrixmaterials M über die eingebrachten Durchgangsöffnungen aufweisen.

Das Verarbeiten des Matrixmaterials M kann bei der vorliegenden Erfindung in einem Arbeitsgang erfolgen, wodurch das Problem beim konventionellen Laminierprozess, dass eine Schicht der Matrix austrocknet und damit die Verbindung mit einer nachfolgen aufgetragenen Matrix gefährdet ist, verhindert wird.

Ferner weist das Herstellungsverfahren der vorliegenden Erfindung weiter einen Schritt S400 des Aushärten des Matrixmaterials M, um das faserverstärkte Filtertrommelelement herzustellen, auf. Nach dem Aushärten können optional weitere Behandlungs- und Verarbeitungsvorgänge vorgesehen sein. So kann beispielsweise das mindestens eine Abdeckelement (sofern verwendet) von dem Außenkonturelement und dem Innenkonturelement gelöst werden. Ferner kann die Stützeinrichtung mit der Außenkontur-Stützstruktur 50 und die Innenkontur-Stützstruktur 60 von der Formeinrichtung 10 gelöst werden, sofern diese nicht mit der Formeinrichtung zu einer Einheit integriert wurde. Weiter können beispielsweise alle Bestandteile aus Einwegopfermaterial (z.B. das Außenkonturelement, das Innenkonturelement, ein oder mehrere rohrförmige Elemente und dergleichen) von dem hergestellten faserverstärkten Filtertrommelelement entfernt werden.

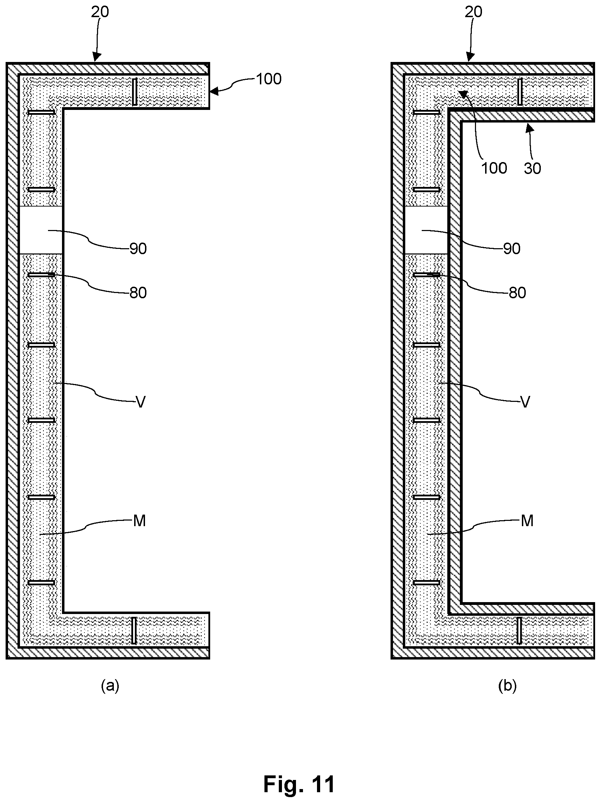

Beispielhaft sind gemäß dem Herstellungsverfahren der vorliegenden Erfindung hergestellte faserverstärkte Filtertrommelelemente in Figuren 11(a) und 11(b) dargestellt, wobei Figur 11(a) ein faserverstärktes Filtertrommelelement darstellt, bei welchem nur das Außenkonturelement 20 einen Bestandteil des fertigen faserverstärkten Filtertrommelelements gemeinsam mit dem Faserverbundwerkstoff 100 bildet, während Figur 11(b) ein faserverstärktes Filtertrommelelement darstellt, bei welchem sowohl das Außenkonturelement 20 als auch das Innenkonturelement 30 einen Bestandteil des fertigen faserverstärkten Filtertrommelelements gemeinsam mit dem Faserverbundwerkstoff 100 bilden.

Das hierin beschriebene Herstellungsverfahren der vorliegenden Erfindung kann zur Herstellung von faserverstärkten Filtertrommelelementen für verschiedene Filtervorrichtungen genutzt werden.

Die vorliegende Erfindung stellt somit ein Filtertrommelelement für eine Filtervorrichtung bereit, welches mittels eines Herstellungsverfahrens gemäß der vorliegenden Erfindung hergestellt ist. Das Filtertrommelelement kann eine Halbtrommel oder Volltrommel einer Trommelfiltervorrichtung oder einer Zentrifugenvorrichtung bilden. Beispielsweise kann dadurch ein Filtertrommelelement gefertigt werden, welches für eine Trommel einer Trommelfiltervorrichtung, eine Trommel einer diskontinuierlich oder kontinuierlich arbeitenden Filterzentrifuge (z.B. eine Schälzentrifuge, eine Schubzentrifuge und dergleichen), eine Trommel einer diskontinuierlich oder kontinuierlich arbeitenden Sedimentationszentrifugenvorrichtung (auch Dekanter oder Dekanter-Zentrifuge genannt) und dergleichen verwendet werden kann. Beispiele für Filtervorrichtungen mit Trommeln, auf welche das Herstellungsverfahren der vorliegenden Erfindung anwendbar sein können, sind beispielsweise aus der DE 3617768 A1, der EP 2 633 917 A2, der EP 2 633 918 A2, der DE 3301099 A1 und der DE 7233600 U bekannt.

Mit der vorliegenden Erfindung können der Personalaufwand und Herstellungskosten bei der Herstellung von faserverstärkten Filtertrommelelementen im Vergleich zum herkömmlichen manuellen Laminierprozess deutlich gesenkt werden, kann die Herstellungszeit aufgrund schnellerer Prozessgeschwindigkeit und weniger Handarbeit verkürzt werden, kann Fertigungsqualität die durch die präzisere Anordnung der Verstärkungsfasern und die Vermeidung von Handarbeit verbessert werden und kann die Bauteildicke reduziert werden, wodurch Material und Kosten eingespart werden können.

## Patentansprüche

1. Herstellungsverfahren eines faserverstärkten Filtertrommelelements für eine Filtervorrichtung, das Herstellungsverfahren aufweisend:
Bereitstellen einer Formeinrichtung mit einem Außenkonturelement und einem Innenkonturelement, wobei das Außenkonturelement und das Innenkonturelement derart zueinander komplementär ausgebildet sind und angeordnet werden, dass das Außenkonturelement und das Innenkonturelement einen Formhohlraum in Gestalt des herzustellenden faserverstärkten Filtertrommelelements zwischen dem Außenkonturelement und dem Innenkonturelement definieren, wobei der Formhohlraum einen ersten Endabschnitt und einen zweiten Endabschnitt aufweist,
Anordnen von Verstärkungsfasern innerhalb des Formhohlraums,
Einbringen eines Matrixmaterials in den Formhohlraum mittels Schwerkraftwirkung auf das Matrixmaterial und/oder mittels einer durch eine Druckdifferenzerzeugungseinrichtung erzeugten Druckdifferenz zwischen dem ersten Endabschnitt und dem zweiten Endabschnitt des Formhohlraums, um den Formhohlraum mit Matrixmaterial zu füllen und die im Formhohlraum angeordneten Verstärkungsfasern mit Matrixmaterial zu umgeben, und
Aushärten des Matrixmaterials, um das faserverstärkte Filtertrommelelement herzustellen.

2. Herstellungsverfahren nach Anspruch 1, wobei das Bereitstellen der Formeinrichtung mit einem Außenkonturelement und einem Innenkonturelement und das Anordnen von Verstärkungsfasern innerhalb des Formhohlraums aufweisen:
Anordnen des Innenkonturelements,
Anordnen von Verstärkungsfasern entlang des Innenkonturelements,
Anordnen des Außenkonturelements komplementär zum Innenkonturelement, um den Formhohlraum mit den darin angeordneten Verstärkungsfasern zu bilden,
wobei optional das Anordnen von Verstärkungsfasern aufweist: Anordnen der Verstärkungsfasern in Form von Fasermatten in einer oder mehreren Lagen im Abstand voneinander, optional unter Verwendung von Abstandshaltern zur Distanzhaltung zwischen den mehreren Lagen aus Fasermatten.

3. Herstellungsverfahren nach Anspruch 1 oder 2, wobei das Einbringen des Matrixmaterials in den Formhohlraum mittels der Druckdifferenz zwischen dem ersten Endabschnitt und dem zweiten Endabschnitt des Formhohlraums aufweist:
Befüllen des Formhohlraums mit Matrixmaterial durch Ansaugen des Matrixmaterial in den Formhohlraum mittels eines an den Formhohlraum angelegten Unterdrucks, und/oder Befüllen des Formhohlraums mit Matrixmaterial durch Injizieren des Matrixmaterials mit Druck in den Formhohlraum,
wobei optional das Außenkonturelement und das Innenkonturelement so angeordnet werden, dass sie sich mit ihrer Längserstreckung entlang einer Vertikalrichtung erstrecken, so dass das Matrixmaterial anhand des erzeugten Unterdrucks und/oder des auf das Matrixmaterial aufgebrachten Drucks den Formhohlraum von unten nach oben entlang der Vertikalrichtung füllt oder so dass das Matrixmaterial anhand Schwerkraftwirkung den Formhohlraum von oben nach unten füllt.

4. Herstellungsverfahren nach einem der vorhergehenden Ansprüche, wobei die Druckdifferenzerzeugungseinrichtung eine Vakuumpumpe aufweist und das Herstellungsverfahren ferner aufweist
Abdichten des Formhohlraums,
Verbinden des ersten Endabschnitts des Formhohlraums mit einem Ansauganschluss der Vakuumpumpe,
Verbinden des zweiten Endabschnitts des Formhohlraums mit einer Vorratseinrichtung, in welcher ein Matrixmaterial bevorratet ist, und
Erzeugen von Unterdruck mittels der Vakuumpumpe und Ansaugen des Matrixmaterials aus der Vorratseinrichtung mittels des erzeugten Unterdrucks in den Formhohlraum.

5. Herstellungsverfahren nach einem der vorhergehenden Ansprüche, wobei die Druckdifferenzerzeugungseinrichtung eine das Matrixmaterial mit Druck beaufschlagende Druckbeaufschlagungseinrichtung, optional eine Pumpe und/oder einen Vorlagebehälter, welcher mit Matrixmaterial gefüllt ist und dazu eingerichtet ist, mittels Druck beaufschlagt zu werden, aufweist und das Herstellungsverfahren ferner aufweist
Abdichten des Formhohlraums,
Verbinden von einem von dem ersten und dem zweiten Endabschnitt des Formhohlraums mit einem Druckanschluss der Druckbeaufschlagungseinrichtung, und
Injizieren von Matrixmaterial mittels der Druckbeaufschlagungseinrichtung in den Formhohlraum, um mit Druck das Matrixmaterial in den Formhohlraum zu füllen,
das Herstellungsverfahren optional aufweisend: Verbinden eines Sauganschluss der Druckbeaufschlagungseinrichtung mit einer Vorratseinrichtung, in welcher ein Matrixmaterial bevorratet ist.

6. Herstellungsverfahren nach einem der vorhergehenden Ansprüche, wobei der erste und der zweite Endabschnitt des Formhohlraums offen sind und das Herstellungsverfahren ferner aufweist, nach dem Bereitstellen der Formeinrichtung mit einem Außenkonturelement und einem Innenkonturelement und dem Anordnen von Verstärkungsfasern innerhalb des Formhohlraums:
Verbinden des Außenkonturelements und des Innenkonturelements an dem ersten und dem zweiten Endabschnitt des Formhohlraum miteinander mittels eines oder mehreren Endabschnittverbindungselementen, um den Formhohlraum an dem ersten und den zweiten Endabschnitt des Formhohlraums abzudichten und einen geschlossenen Formhohlraum zwischen dem Außenkonturelement und dem Innenkonturelement zu bilden,
Einbringen von Durchgangsöffnungen in das Außenkonturelement, das Innenkonturelement und/oder das eine oder die mehreren Endabschnittverbindungselemente, und
Einbringen des Matrixmaterials über die eingebrachten Durchgangsöffnungen.

7. Herstellungsverfahren nach einem der Ansprüche 1 bis 5, wobei der erste und der zweite Endabschnitt des Formhohlraums offen sind und das Herstellungsverfahren ferner aufweist, nach dem Bereitstellen der Formeinrichtung mit einem Außenkonturelement und einem Innenkonturelement und dem Anordnen von Verstärkungsfasern innerhalb des Formhohlraums:
lösbares Anbringen mindestens eines Abdeckelements an dem Außenkonturelement und dem Innenkonturelement, um den Formhohlraum an dem ersten und den zweiten Endabschnitt des Formhohlraums abzudichten und einen geschlossenen Formhohlraum zwischen dem Außenkonturelement und dem Innenkonturelement zu bilden,
Einbringen des Matrixmaterials über das mindestens eine Abdeckelement, und
Lösen des mindestens einen Abdeckelements von dem Außenkonturelement und dem Innenkonturelement.

8. Herstellungsverfahren nach einem der vorhergehenden Ansprüche, wobei mindestens eines von dem Außenkonturelement und dem Innenkonturelement aus mindestens einem von einem Kunststoffmaterial, optional einem Thermoplast, einem Metallmaterial und einem Einwegopfermaterial, optional einem Pappematerial, ausgebildet ist, wobei das Kunststoffmaterial und/oder das Metallmaterial dazu vorgesehen ist, einen Bestandteil des fertig hergestellten faserverstärkten Filtertrommelelement zu bilden, und wobei das Einwegopfermaterial dazu vorgesehen ist, von dem fertig hergestellten faserverstärkten Filtertrommelelement entfernt zu werden.

9. Herstellungsverfahren nach einem der vorhergehenden Ansprüche, ferner aufweisend mindestens eines von:
Anordnen einer Außenkontur-Stützstruktur zur Abstützung und Fixierung des Außenkonturelements, und
Anordnen einer Innenkontur-Stützstruktur zur Abstützung und Fixierung des Innenkonturelements, wobei optional die Innenkontur-Stützstruktur mit dem Innenkonturelement verbunden oder damit als eine Einheit integriert, insbesondere einstückig, ausgebildet wird.

10. Herstellungsverfahren nach einem der vorhergehenden Ansprüche, ferner aufweisend:
Anordnen von rohrförmigen Elementen innerhalb des Formhohlraums, um Durchgangsöffnungen in dem hergestellten faserverstärkten Filtertrommelelement vorzusehen.

11. Herstellungsverfahren nach einem der vorhergehenden Ansprüche, wobei
das Außenkonturelement eine äußere Mantelkonturwand und mindestens eine äußere Stirnwand-Konturwand aufweist, welche eine Außenkontur eines Mantels und mindestes einer Stirnwand des herzustellenden faserverstärkten Filtertrommelelements definieren,
wobei das Innenkonturelement eine innere Mantelkonturwand und mindestens eine innere Stirnwand-Konturwand aufweist, welche eine Innenkontur eines Mantels und mindestes einer Stirnwand des herzustellenden faserverstärkten Filtertrommelelements definieren.

12. Vorrichtung zur Herstellung eines faserverstärktes Filtertrommelelements für eine Filtervorrichtung, optional Vorrichtung zur Durchführung eines Herstellungsverfahren nach einem der vorhergehenden Ansprüche, die Vorrichtung aufweisend:
eine Formeinrichtung mit einem Außenkonturelement und einem Innenkonturelement, wobei das Außenkonturelement und das Innenkonturelement derart zueinander komplementär ausgebildet sind und angeordnet sind, dass das Außenkonturelement und das Innenkonturelement einen Formhohlraum in Gestalt des herzustellenden faserverstärkten Filtertrommelelements zwischen dem Außenkonturelement und dem Innenkonturelement definieren, wobei der Formhohlraum einen ersten Endabschnitt und einen zweiten Endabschnitt aufweist, und
eine Druckdifferenzerzeugungseinrichtung, welche mit der Formvorrichtung fluidverbindbar ist, um eine Druckdifferenz zwischen dem ersten Endabschnitt und dem zweiten Endabschnitt des Formhohlraums derart zu erzeugen, dass ein Matrixmaterial mittels der Druckdifferenz in den Formhohlraum einbringbar ist, um den Formhohlraum mit Matrixmaterial zu füllen und die im Formhohlraum angeordneten Verstärkungsfasern mit Matrixmaterial zu umgeben.

13. Vorrichtung zur Herstellung des faserverstärktes Filtertrommelelements nach Anspruch 12, ferner aufweisend eine Vorratseinrichtung, in welcher ein Matrixmaterial bevorratet ist, wobei:
die Druckdifferenzerzeugungseinrichtung eine Vakuumpumpe aufweist, mittels welcher ein Unterdruck zum Ansaugen des Matrixmaterials aus der Vorratseinrichtung in den Formhohlraum erzeugbar ist, um den Formhohlraum mit Matrixmaterial aus der Vorratseinrichtung mittels des erzeugten Unterdrucks zu füllen,
und/oder
die Druckdifferenzerzeugungseinrichtung eine Druckbeaufschlagungseinrichtung aufweist, welche dazu eingerichtet ist, Matrixmaterial in den Formhohlraum mit Druck zu injizieren, um den Formhohlraum mit Matrixmaterial zu füllen,
wobei optional die Druckbeaufschlagungseinrichtung aufweist:
eine Pumpe, wobei ein Sauganschluss der Pumpe mit der Vorratseinrichtung verbunden ist und ein Druckanschluss der Pumpe mit dem Formhohlraum verbunden ist, wobei die Pumpe dazu eingerichtet ist, aus der Vorratseinrichtung angesaugtes Matrixmaterial in den Formhohlraum zu injizieren, um den Formhohlraum mit Matrixmaterial zu füllen,
und/oder
einen druckbeaufschlagten Vorlagebehälter, welcher mit Matrixmaterial gefüllt ist und mittels Druck beaufschlagbar ist, um das Matrixmaterial aus dem Vorlagebehälter herauszudrücken und das herausgedrückte Matrixmaterial in den Formhohlraum zu injizieren, um den Formhohlraum mit Matrixmaterial zu füllen.

14. Vorrichtung zur Herstellung des faserverstärktes Filtertrommelelements nach Anspruch 12 oder 13, ferner aufweisend
eine Stützeinrichtung, welche mindestens eine von einer Außenkontur-Stützstruktur zur Abstützung und Fixierung des Außenkonturelements und einer Innenkontur-Stützstruktur zur Abstützung und Fixierung des Innenkonturelements aufweist.

15. Filtertrommelelement für eine Filtervorrichtung, welches mittels eines Herstellungsverfahrens gemäß einem der Ansprüche 1 bis 11 hergestellt ist,
wobei das Filtertrommelelement eine Halbtrommel oder Volltrommel einer Trommelfiltervorrichtung oder einer Zentrifugenvorrichtung bildet.
